# EUROPEAN PATENT SPECIFICATION

(11) **EP 4 258 478 B1**
(45) Date of publication and mention of the grant of the patent: **29.04.2026**
(21) Application number: 22775988.3
(22) Date of filing: 17.03.2022
(51) Int. Cl.: H04B 5/26, H04B 5/43, H04B 5/79

(54) **ELECTRONIC DEVICE HAVING PLURALITY OF COIL ANTENNAS**
ELEKTRONISCHE VORRICHTUNG MIT MEHREREN SPULENANTENNEN
DISPOSITIF ÉLECTRONIQUE AYANT UNE PLURALITÉ D'ANTENNES À CADRE

(30) Priority: 26.03.2021 KR 20210039818
(43) Date of publication of application: 11.10.2023
(73) Proprietor: Samsung Electronics Co., Ltd., Suwon-si, Gyeonggi-do 16677 (KR)
(72) Inventor: LEE, Woosup, Suwon-si Gyeonggi-do 16677 (KR); PARK, Jungsik, Suwon-si Gyeonggi-do 16677 (KR)
(74) Representative: Arnold & Siedsma
(86) International application number: PCT/KR2022/003774
(87) International publication number: WO 2022/203286

(56) References cited:
- CN-A- 110 730 021
- KR-A- 20130 101 245
- KR-A- 20150 038 921
- KR-A- 20180 116 721
- KR-A- 20210 001 059
- US-A1- 2020 267 834
- US-A1- 2020 411 953
- US-A9- 2021 044 147

## Description

### [Technical Field]

Various embodiments relate to an arrangement structure of a plurality of coils used as antennas in an electronic device.

### [Background Art]

An electronic device may include a plurality of coils. For example, an electronic device may include a first coil configured to support short-range wireless communication (e.g., near-field communication (NFC)) and a second coil configured to support wireless charging (e.g., Wireless Power Consortium (WPC)).

US 2021 /044147 A9 (MOJO MOBILITY INC [US]) 11 February 2021 (2021-02-11) relates to a charger or power supply for wireless charging.

US 2020/411953 A1 (OH CHANHEE [KR]) 31 December 2020 (2020-12-31) relates to an electronic device includes a housing structure including a first surface facing in a first direction and a second surface facing in a second direction opposite to the first direction, a display unit disposed at the first surface, a printed circuit board disposed inside the housing structure, a first coil disposed between the printed circuit board and the second surface and electrically connected to the printed circuit board and including a first pattern wound one or more times about a first axis parallel to the second direction, and a second coil disposed between the printed circuit board and the second surface and electrically connected to the printed circuit board and including a second pattern wound one or more times about a second axis parallel to the second direction.

US 2020/267834 A1 (LEE WOOSUP [KR] ET AL) 20 August 2020 (2020-08-20) relates to an electronic device including a wireless charging coil, a first NFC coil and a second NFC coil.

### [Disclosure of Invention]

### [Technical Problem]

Magnets may be disposed around the coils. For example, a magnet may be mounted in an electronic device to fix the electronic device to a car cradle or to attach a card case to a portable electronic device.

However, a magnet may be adjacent to a coil (e.g., an NFC coil) in an electronic device. As a result, the RF performance of the coil may decrease. In order to ensure RF performance, the magnet may be spaced apart from the coil by a predetermined distance or more. For example, the magnet may have a ring shape surrounding the convex edge of the NFC coil. However, this shape may cause a structural problem resulting in a necessity to increase the width of the electronic device.

Various embodiments of the disclosure may provide an electronic device including a coil having a structure disposed adjacent to a magnet while ensuring RF performance of a coil without increasing the width of the electronic device.

The technical problems to be addressed by the disclosure are not limited to those described above, and other technical problems, which are not described above, may be clearly understood from the following description by a person ordinarily skilled in the related art, to which the embodiments disclosed herein belong.

### [Solution to Problem]

In various embodiments, an electronic device may include a housing including a front surface, a rear surface, and a side surface surrounding the front surface and the rear surface, a first magnet and a second magnet located inside the housing while not overlapping each other when viewed from the rear surface, preferably in a direction perpendicular to the rear surface, a first coil having a structure located between the first magnet and the second magnet and wound several times around a first axis perpendicular to the rear surface not to overlap the first magnet and the second magnet when viewed from the rear surface, preferably in a direction perpendicular to the rear surface, and a second coil located inside the housing not to overlap the first magnet and the second magnet and to overlap the first coil when viewed from the rear surface, preferably in a direction perpendicular to the rear surface, wherein the second coil has a structure passing through a space between the first magnet and the second magnet.

An electronic device according to various embodiments may include a housing including a front surface, a rear surface, and a side surface surrounding the front surface and the rear surface, a first coil accommodated inside the housing and having a structure of being wound several times around a first axis perpendicular to the rear surface when viewed from the rear surface, preferably in a direction perpendicular to the rear surface, a second coil accommodated inside the housing, overlapping the first coil when viewed from the rear surface, and having a structure of being wound several times, a first magnet disposed adjacent to a left edge of the first coil while not overlapping the first coil and the second coil when viewed from the rear surface, preferably in a direction perpendicular to the rear surface, and a second magnet disposed adjacent to a right edge of the first coil while not overlapping the first coil and the second coil when viewed from the rear surface, preferably in a direction perpendicular to the rear surface. The second coil may include a first pattern having a structure extending straight from left to right above the first coil while not overlapping the first coil when viewed from the rear surface, preferably in a direction perpendicular to the rear surface, a second pattern having a structure extending from the right end of the first pattern to an inner space defined inside the first coil, and a third pattern having a structure extending from an end of the second pattern located in the inner space to a place where the left end of the first pattern is located.

### [Advantageous Effects of Invention]

According to various embodiments, it is possible to provide an electronic device including a coil having a structure disposed adjacent to a magnet while ensuring RF performance of a coil without increasing the width of the electronic device. Various other effects identified directly or indirectly through this document may be provided.

### [Brief Description of Drawings]

FIG. 1 is a block diagram of an electronic device according to various embodiments in a network environment.
FIG. 2 is a block diagram illustrating a wireless communication module, a power management module, and an antenna module of an electronic device according to various embodiments.
FIG. 3A is a view illustrating an electronic device according to an embodiment in an unfolded state, FIG. 3B is a view illustrating the electronic device in a folded state, and FIG. 3C is an exploded perspective view of the electronic device.
FIG. 4A is an exploded perspective view of the electronic device according to an embodiment.
FIG. 4B is a view illustrating the structure illustrated in FIG. 4A and electrical connection members disposed adjacent thereto.
FIG. 5 is a cross-sectional view of the structure illustrated in FIG. 4A, taken in direction A-A'.
FIG. 6 is a front view of an antenna structure according to an embodiment.
FIGS. 7A and 7B are views illustrating directions of current flowing in a coil disposed in the antenna structure of FIG. 6.
FIGS. 8A and 8B are diagrams illustrating the strength of a magnetic field induced by the coil disposed in the antenna structure of FIG. 6.
FIG. 9A is a view illustrating a first layer of an antenna structure according to an embodiment, and FIG. 9B is a view illustrating a second layer of the antenna structure.
FIG. 10 is a front view of an antenna structure according to an embodiment.
FIG. 11 is a view illustrating directions of current flowing in a coil disposed in the antenna structure of FIG. 10.
FIG. 12 is a diagram illustrating the strength of a magnetic field induced by the coil disposed in the antenna structure of FIG. 10.
FIG. 13 is a front view of an antenna structure according to an embodiment.
FIG. 14 is a front view of an antenna structure according to an embodiment.
FIG. 15 is a front view of an antenna structure according to an embodiment.

### [Mode for the Invention]

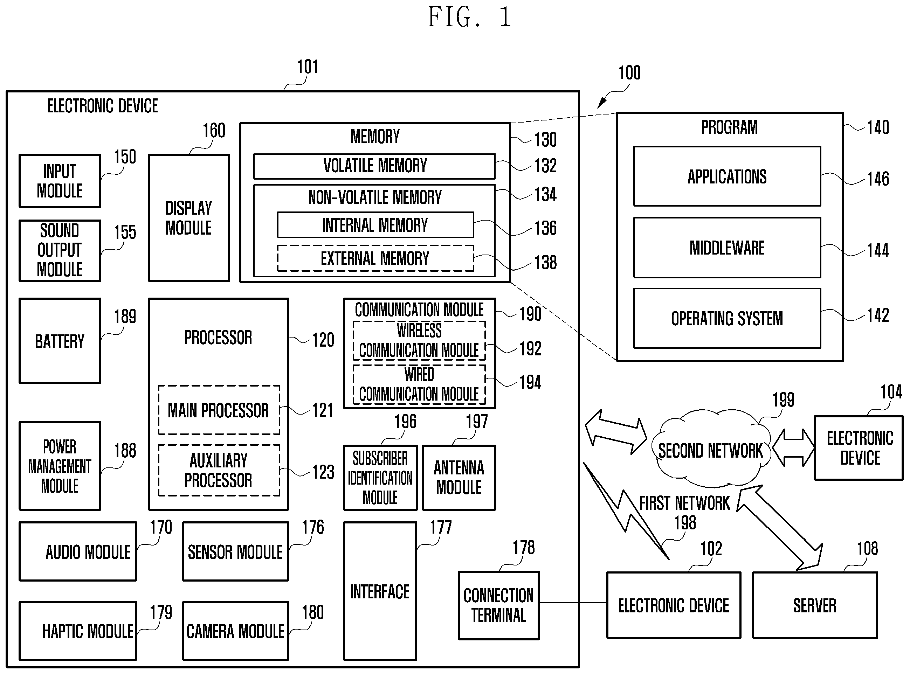

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

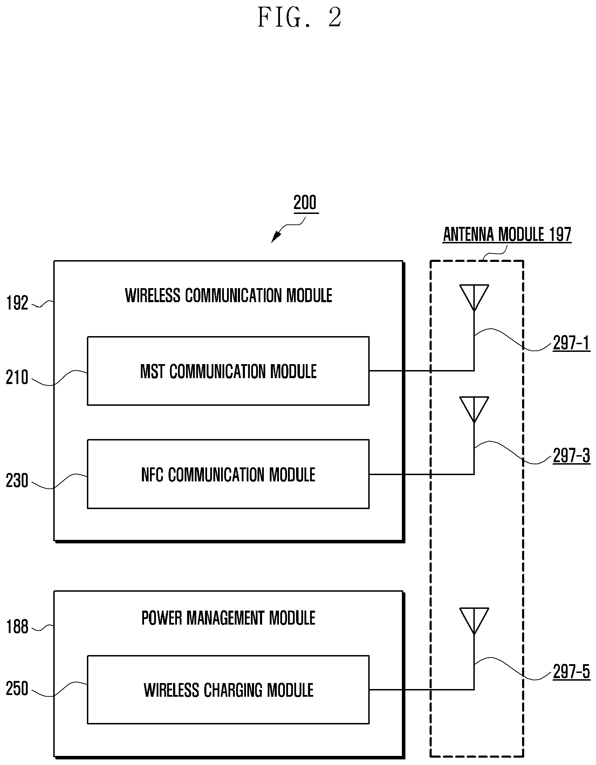

Fig. 2 is a block diagram 200 illustrating the wireless communication module 192, the power management module 188, and the antenna module 197 of the electronic device 101 according to various embodiments. Referring to Fig. 2, the wireless communication module 192 may include a magnetic secure transmission (MST) communication module 210 or a near-field communication (NFC) module 230, and the power management module 188 may include a wireless charging module 250. In such a case, the antenna module 197 may include a plurality of antennas that include a MST antenna 297-1 connected with the MST communication module 210, a NFC antenna 297-3 connected with the NFC communication module 230, and a wireless charging antenna 297-5 connected with the wireless charging module 250. For ease of description, the same components as those described in regard to Fig. 1 are briefly described or omitted from the description.

The MST communication module 210 may receive a signal containing control information or payment information such as card information from the processor 120, generate a magnetic signal corresponding to the received signal, and then transfer the generated magnetic signal to the external electronic device 102 (e.g., a point-of-sale (POS) device) via the MST antenna 297-1. To generate the magnetic signal, according to an embodiment, the MST communication module 210 may include a switching module (not shown) that includes one or more switches connected with the MST antenna 297-1, and control the switching module to change the direction of voltage or current supplied to the MST antenna 297-1 according to the received signal. The change of the direction of the voltage or current allows the direction of the magnetic signal (e.g., a magnetic field) emitted from the MST antenna 297-1 to change accordingly. If detected at the external electronic device 102, the magnetic signal with its direction changing may cause an effect (e.g., a waveform) similar to that of a magnetic field that is generated when a magnetic card corresponding to the card information associated with the received signal is swiped through a card reader of the electronic device 102. According to an embodiment, for example, payment-related information and a control signal that are received by the electronic device 102 in the form of the magnetic signal may be further transmitted to an external server 108 (e.g., a payment server) via the network 199.

The NFC communication module 230 may obtain a signal containing control information or payment information such as card information from the processor 120 and transmit the obtained signal to the external electronic device 102 via the NFC antenna 297-3. According to an embodiment, the NFC communication module 230 may receive such a signal transmitted from the external electronic device 102 via the NFC antenna 297-3.

The wireless charging module 250 may wirelessly transmit power to the external electronic device 102 (e.g., a cellular phone or wearable device) via the wireless charging antenna 297-5, or wirelessly receive power from the external electronic device 102 (e.g., a wireless charging device). The wireless charging module 250 may support one or more of various wireless charging schemes including, for example, a magnetic resonance scheme or a magnetic induction scheme.

According to an embodiment, some of the MST antenna 297-1, the NFC antenna 297-3, or the wireless charging antenna 297-5 may share at least part of their radiators. For example, the radiator of the MST antenna 297-1 may be used as the radiator of the NFC antenna 297-3 or the wireless charging antenna 297-5, or vice versa. In such a case, the antenna module 197 may include a switching circuit (not shown) adapted to selectively connect (e.g., close) or disconnect (e.g. open) at least part of the antennas 297-1, 297-3, or 297-5, for example, under the control of the wireless communication module 192 (e.g., the MST communication module 210 or the NFC communication module 230) or the power management module (e.g., the wireless charging module 250). For example, when the electronic device 101 uses a wireless charging function, the NFC communication module 230 or the wireless charging module 250 may control the switching circuit to temporarily disconnect at least one portion of the radiators shared by the NFC antenna 297-3 and the wireless charging antenna 297-5 from the NFC antenna 297-3 and to connect the at least one portion of the radiators with the wireless charging antenna 297-5.

According to an embodiment, at least one function of the MST communication module 210, the NFC communication module 230, or the wireless charging module 250 may be controlled by an external processor (e.g., the processor 120). According to an embodiment, at least one specified function (e.g., a payment function) of the MST communication module 210 or the NFC communication module 230 may be performed in a trusted execution environment (TEE). According to an embodiment, the TEE may form an execution environment in which, for example, at least some designated area of the memory 130 is allocated to be used for performing a function (e.g., a financial transaction or personal information-related function) that requires a relatively high level of security. In such a case, access to the at least some designated area of the memory 130 may be restrictively permitted, for example, according to an entity accessing thereto or an application being executed in the TEE.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

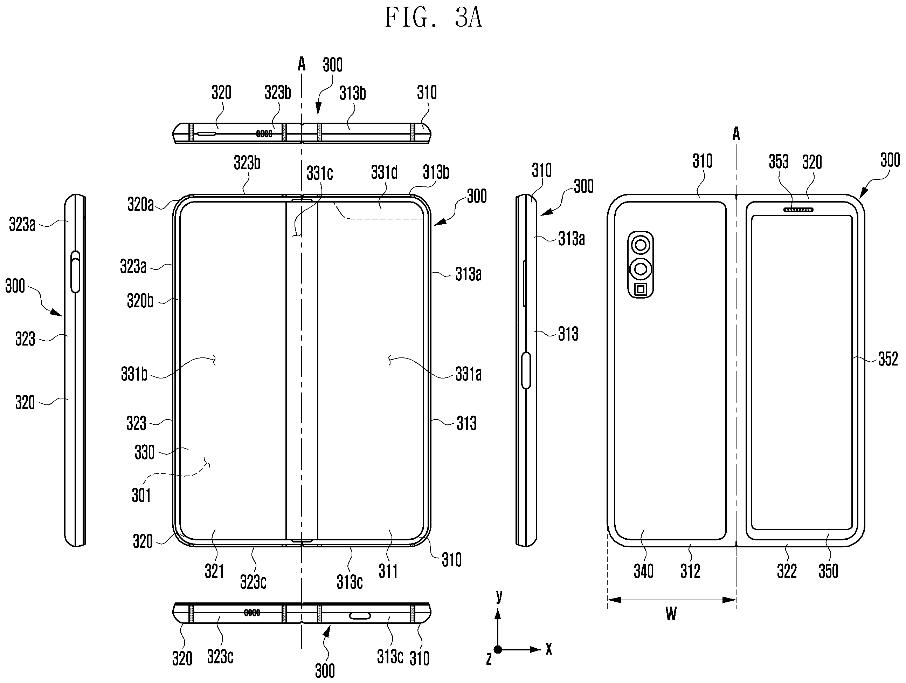

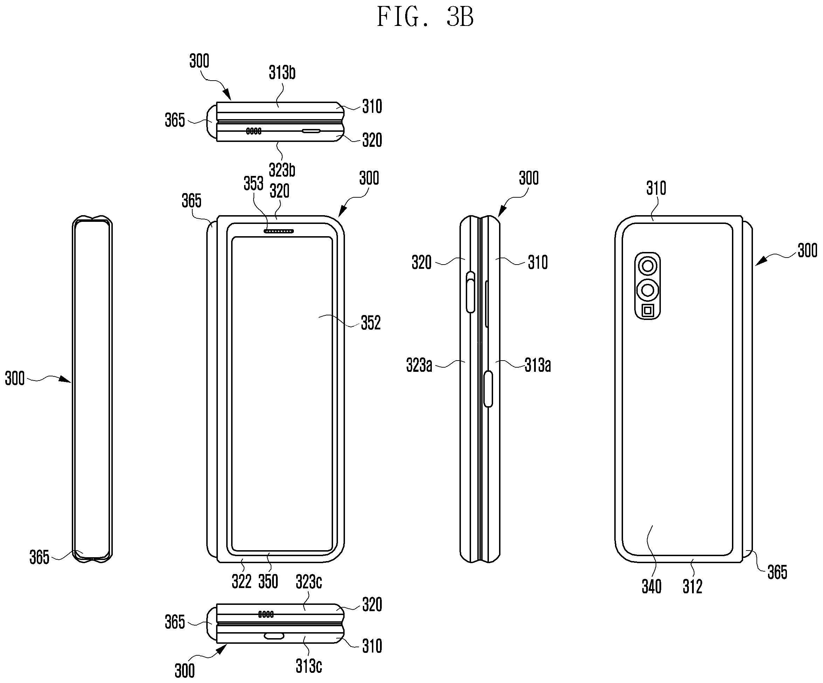

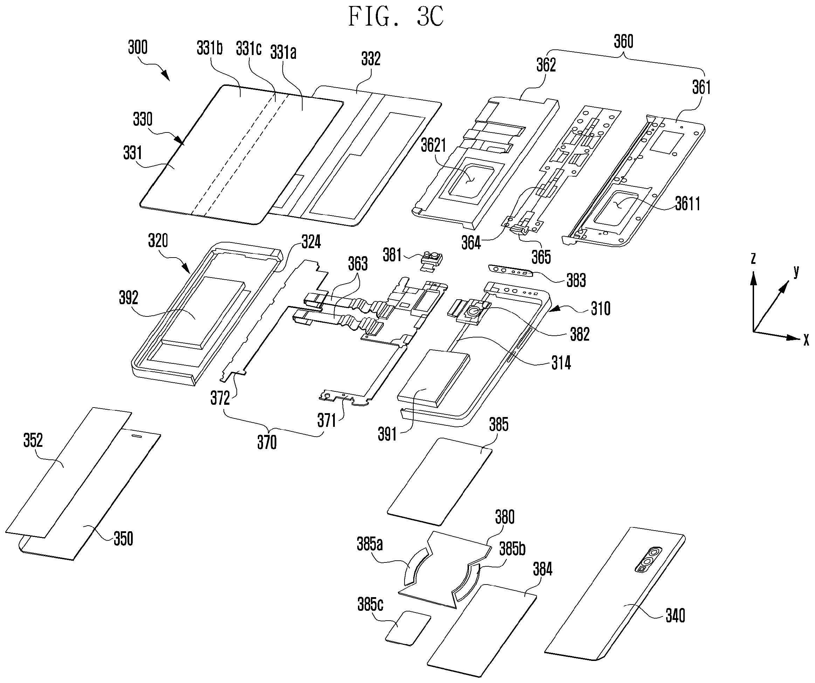

FIG. 3A is a view illustrating the electronic device 300 according to an embodiment in an unfolded state. FIG. 3B is a view illustrating the electronic device 300 in a folded state, and FIG. 3C is an exploded perspective view of the electronic device 300.

Referring to FIG. 3A, the electronic device 300 (e.g., the electronic device 101 in FIG. 1) may include a pair of housing structures 310 and 320 (e.g., the foldable housing structure) rotatably coupled to each other via a hinge structure (e.g., the hinge structure 364 in FIG. 3C), a hinge cover (e.g., the hinge cover 365 in FIG. 3B) configured to cover the foldable portions of the pair of housing structures 310 and 320, and a display 330 (e.g., a flexible display, a foldable display, or a first display) disposed in a space formed by the pair of housing structures 310 and 320. Herein, the surface on which the display 330 is disposed may be defined as the front surface of the electronic device 300, and the surface opposite to the front surface may be defined as the rear surface of the electronic device 300. In addition, the surface surrounding the space between the front surface and the rear surface may be defined as the side surface of the electronic device 300.

In an embodiment, the pair of housing structures 310 and 320 may include a first housing structure 310, a second housing structure 320, a first rear surface cover 340, and a second rear surface cover 350. The pair of housing structures 310 and 320 of the electronic device 300 are not limited to the shapes and assembly illustrated in FIGS. 3A and 3B, but may be implemented by other shapes or other combinations and/or assemblies of components. For example, in another embodiment, the first housing structure 310 and the first rear surface cover 340 may be configured integrally with each other, and the second housing structure 320 and the second rear surface cover 350 may be configured integrally with each other.

According to an embodiment, the first housing structure 310 and the second housing structure 320 may be disposed on opposite sides about a folding axis (the axis A), and may have generally substantially symmetrical shapes with respect to the folding axis (the axis A). According to an embodiment, the angle or distance between the first housing structure 310 and the second housing structure 320 may vary depending on whether the electronic device 300 is in the unfolded state (flat state or unfolding state), in the folded state (folding state), or in the intermediate state.

In an embodiment, when the electronic device 300 is in the unfolded state, the first housing structure 310 may include a first surface 311 connected to the hinge structure (e.g., the hinge structure 364 in FIG. 3C) and facing a first direction (e.g., the z-axis direction in FIG. 3A), a second surface 312 facing a second direction (e.g., the -z-axis direction in FIG. 3A) opposite to the first direction, and a first side surface member 313 surrounding at least a portion of the space between the first surface 311 and the second surface 313. In an embodiment, the first side surface member 313 may include a first side surface 313a disposed in parallel to the folding axis (the axis A), a second side surface 313b extending from one end of the first side surface 313a in a direction perpendicular to the folding axis, and a third side surface 313c extending from the other end of the first side surface 313a in a direction perpendicular to the folding axis (the axis A).

In an embodiment, when the electronic device 300 is in the unfolded state, the second housing structure 320 may include a third surface 321 connected to the hinge structure (e.g., the hinge structure 364 in FIG. 3) and disposed to face a third direction, a fourth surface 322 facing a fourth direction opposite to the third direction, and a second side member 323 surrounding at least a portion of the space between the third surface 321 and the fourth surface 322. In the state in which the pair of housing structures 310 and 320 are folded, the first surface 311 may face the third surface 321, and in the state in which the pair of housing structures 310 and 320 are unfolded, the third direction may be the same as the first direction. In an embodiment, the second side surface member 323 may include a fourth side surface 323a disposed in parallel to the folding axis (the axis A), a fifth side surface 323b extending from one end of the fourth side surface 323a in a direction perpendicular to the folding axis (the axis A), and a sixth side surface 323c extending from the other end of the fourth side surface 323a in a direction perpendicular to the folding axis (the axis A). In an embodiment, in the folded state, the third surface 321 may face the first surface 311.

In an embodiment, the electronic device 300 may include a recess 301 defined to accommodate the display 330 through structural shape coupling between the first housing structure 310 and the second housing structure 320. The recess 301 may have substantially the same size as the display 330.

In an embodiment, at least a portion of the first housing structure 310 and at least a portion of the second housing structure 320 may be made of a metal material or a non-metal material having rigidity, the level of which is selected in order to support the display 330.

In an embodiment, the first rear surface cover 340 may be disposed on the second surface 312 of the first housing structure 310 and may have a substantially rectangular periphery. In an embodiment, at least a portion of the periphery may be surrounded by the first housing structure 310. Similarly, the second rear surface cover 350 may be disposed on the fourth face 322 of the second housing structure 320, and at least a portion of the periphery of the second rear surface cover 250 may be surrounded by the second housing structure 320.

In the illustrated embodiment, the first rear surface cover 340 and the second rear surface cover 350 may have substantially symmetrical shapes about the folding axis (the axis A). According to another embodiment, the first rear surface cover 340 and the second rear surface cover 350 may have various different shapes. In another embodiment, the first rear surface cover 340 may be configured integrally with the first housing structure 310, and the second rear surface cover 350 may be configured integrally with the second housing structure 320.

In an embodiment, the first rear surface cover 340, the second rear surface cover 350, the first housing structure 310, and the second housing structure 320 may provide a space, in which various components (e.g., a printed circuit board, an antenna module (e.g., the antenna module 197 in FIG. 1), a sensor module (e.g., the sensor module 176 in FIG. 1), or a battery (e.g., the battery 189 in FIG. 1)) of the electronic device may be disposed, via a structure in which the first rear surface cover 340, the second rear surface cover 350, the first housing structure 310, and the second housing structure 320 are coupled to each other. In an embodiment, one or more components may be disposed or visually exposed on the rear surface of the electronic device 300. For example, one or more components or sensors may be visually exposed through the first rear surface cover 340. In various embodiments, the sensors may include a proximity sensor, a rear camera module, and/or a flash. In another embodiment, at least a portion of a sub-display 352 (e.g., the second display) may be visually exposed through the second rear surface cover 350. In another embodiment, the electronic device 300 may include a speaker module 353, which is disposed over at least some area of the second rear surface cover 350.

The display 330 may be disposed in a space defined by the pair of housing structures 310 and 320. For example, the display 300 may be seated in the recess 301 defined by the pair of housing structures 310 and 320, and may be disposed to occupy substantially most of the front surface of the electronic device 300. Accordingly, the front surface of the electronic device 300 may include the display 330, as well as some area (e.g., a peripheral area) of the first housing structure 310 and some area (e.g., a peripheral area) of the second housing structure 320, which are adjacent to the display 330. In an embodiment, the rear surface of the electronic device 300 may include the first rear surface cover 340 and some area (e.g., a peripheral area) of the first housing structure 310 adjacent to the first rear surface cover 340, as well as the second rear surface cover 350 and some area (e.g., a peripheral area) of the second housing structure 320 adjacent to the second rear surface cover 350.

According to an embodiment, the display 330 may mean a display in which at least one area is deformable into a flat surface or a curved surface. In an embodiment, the display 330 may include a folding area 331c, a first area (or first display area) 331a disposed on one side of the folding area 331c (e.g., the area on the right side of the folding area 331c), and a second area (or second display area) 331b disposed on the other side (e.g., the area on the left side of the folding area 331c). For example, the first area 331a may be disposed in the first surface 311 of the first housing structure 310, and the second area 331b may be disposed in the third surface 321 of the second housing structure 320.

In an embodiment, a sensor module may be disposed under the display 330. For example, as illustrated in FIG. 3A, a sensor module may be disposed under an edge portion (hereinafter, referred to as a sensor area) 331d adjacent to the second side surface 313b in the first area 331a. The sensor module 331d may include components configured to perform various functions and arranged to be exposed to the front surface of the electronic device 200 through the sensor area 331d or one or more openings provided in the sensor area 331d. For example, the sensor area 331d may include a camera hole area, a sensor hole area, an under display camera (UDC) area, and an under display sensor (UDS) area. The sensor module may include at least one of a front camera module, a receiver, a proximity sensor, an illuminance sensor, an iris recognition sensor, an ultrasonic sensor, or an indicator.

In an embodiment, the area division of the display 330 is exemplary, and the display 330 may be divided into multiple areas (e.g., four or more areas or two areas) depending on the structure or functions thereof. For example, in the embodiment illustrated in FIG. 3A, the areas of the display 330 may be divided based on the folding area 331c or the folding axis (the axis A) extending in parallel to the Y axis. However, in another embodiment, the areas of the display 330 may be divided based on another folding area (e.g., a folding area parallel to the X axis) or another folding axis (e.g., a folding axis parallel to the X axis). The aforementioned area division of the display is merely physical division based on the pair of housing structures 310 and 320 and the hinge structure (e.g., the hinge structure 364 in FIG. 3C), and the display 330 may display one full screen substantially through the pair of housing structures 310 and 320 and the hinge structure (e.g., the hinge structure 364 in FIG. 3C). According to an embodiment, the first area 331a and the second area 331b may have generally symmetrical shapes about the folding area 331c.

Referring to FIG. 3B, the hinge cover 365 may be disposed between the first housing structure 310 and the second housing structure 320 to cover internal components (e.g., the hinge structure 364 in FIG. 3C). In an embodiment, the hinge cover 365 may be covered by a portion of the first housing structure 310 and a portion of the second housing structure 320 or may be exposed to the outside depending on the operating state of the electronic device 300 (the flat state or the folded state).

For example, as illustrated in FIG. 3A, when the electronic device 300 is in the unfolded state, the hinge cover 365 may not be exposed by being covered by the first housing structure 310 and the second housing structure 320. For example, as illustrated in FIG. 3B, when the electronic device 300 is in the folded state (e.g., the completely folded state), the hinge cover 365 may be exposed to the outside between the first housing structure 310 and the second housing structure 320. For example, when the first housing structure 310 and the second housing structure 320 are in the intermediate state in which the first housing structure 310 and the second housing structure 320 are folded with a certain angle therebetween, the hinge cover 365 may be at least partially exposed to the outside of the electronic device 300 between the first housing structure 310 and the second housing structure 320. In this case, the exposed area may be smaller than that in the completely folded state. In an embodiment, the hinge cover 365 may include a curved surface.

Hereinafter, the operations of the first and second housing structures 310 and 320 and each area of the display 330 depending on the operating states (e.g., the unfolded state (flat state) and the folded state) of the electronic device 300 will be described.

In an embodiment, when the electronic device 300 is in the unfolded state (flat state) (e.g., the state of FIG. 3A), the first housing structure 310 and the second housing structure 320 may form a first angle (e.g., 180 degrees) therebetween, and the first area 331a and the second area 331b of the display may face substantially the same direction. In addition, the folding area 331c may define substantially the same plane as the first area 331a and the second area 331b. In another embodiment, in the case where the electronic device 300 is in the unfolded state (flat state), when the first housing structure 310 and the second housing structure 320 are rotated by a second angle (e.g., 360 degrees) with respect to each other and folded in reverse so that the second surface 312 and the fourth surface 322 face each other, the first area 331a and the second area 331b of the display may be disposed to face opposite directions with respect to each other.

In an embodiment, when the electronic device 300 is in the folded state (e.g., the state of FIG. 3B), the first housing structure 310 and the second housing structure 320 may be disposed to face each other. The first area 331a and the second area 331b of the display 330 may face each other while forming a narrow angle (e.g., an angle between 0 and about 10 degrees) relative to each other. For example, at least a portion of the folding area 331c may be configured as a curved surface having a predetermined curvature.

In an embodiment, when the electronic device 300 is in the intermediate state, the first housing structure 310 and the second housing structure 320 may be disposed to form a predetermined angle (e.g., about 90 degrees) therebetween. The first area 331a and the second area 331b of the display 330 may form therebetween an angle greater than that in the folded state and smaller than that in the unfolded state. At least a portion of the folding area 331c may be configured as a curved surface having a predetermined curvature, and the curvature in this case may be smaller than that in the folded state.

Referring to FIG. 3C, in an embodiment, the electronic device 300 may include a display 330, a support member assembly 360, at least one printed circuit board 370, a first housing structure 310, a second housing structure 320, a first rear surface cover 340, a second rear surface cover 350, and an antenna structure 380. Herein, the display 330 (e.g., the first display) may be referred to as a display module or a display assembly.

In an embodiment, the antenna structure 380 may be implemented with a flexible printed circuit board (FPCB). The antenna structure 380 may include an antenna (e.g., the MST antenna 297-1, the NFC antenna 297-3, and/or the wireless charging antenna 297-5 in FIG. 2). The antenna structure 380 may be located between the first rear surface cover 340 defining the second surface 312 of the first housing structure 310 and a first printed circuit board 371 disposed in a space defined by the first housing structure 310 (e.g., attached to the first rear surface cover 340). Here, the antenna may be a planar type (or spiral type) coil that may have an axis substantially parallel to a first direction (or second direction) (e.g., an axis parallel to the z axis) and has one or more patterns wound around the axis.

In an embodiment, the antenna structure 380 may include a plurality of layers, and the antenna may be partially provided in the plurality of layers. For example, the antenna may include a first pattern wound one or more times in a clockwise (or counterclockwise) direction around an axis substantially parallel to the first direction (or second direction). The first pattern may include a (1-1)th pattern disposed on the first layer and a (1-2)th pattern disposed on the second layer. The (1-1)th pattern may be connected to the (1-2)th pattern through vias. To form a single current path, one end (or first electrode) and the other end (or second electrode) of the first pattern may be electrically connected to an electronic component (e.g., the wireless charging antenna 250 when the antenna is the wireless charging antenna 297-5 or the NFC communication module 230 when the antenna is the NFC antenna 297-3) mounted on the first printed circuit board 371. Accordingly, when a current is fed from the electronic component to one end or the other end of the first pattern, magnetic fluxes may be induced in the first direction or the second direction. A current may be induced in the antenna by the magnetic fluxes generated by an external electronic device (e.g., the electronic device 102 in FIG. 1), and the induced current may be transmitted to the electronic component.

In an embodiment, the antenna may include portions that are provided at different locations when viewed from the first direction (or second direction). For example, the antenna may include a first pattern provided on the first layer of the antenna structure 380 in a form of being wound one or more times in a clockwise (or counterclockwise) direction around a first axis substantially parallel to the first direction (or second direction), and a second pattern provided on the first layer (or the second layer) in the form of being wound one or more times in the same direction (opposite direction) as the first pattern around a second axis that is different in position from the first axis but is substantially parallel to the first axis.

In an embodiment, an adhesive member 384 may be attached to a surface of the antenna structure 380 that faces the first rear surface cover 340. For example, the adhesive member 384 may include a conductive sponge or conductive poron. A heat dissipation and/or shielding member 385 may be disposed on a surface of the antenna structure 380 that faces the first printed circuit board 371. For example, the heat dissipation and/or shielding member 385 may include a protective film, a graphite sheet, and/or a shielding sheet.

In an embodiment, the electronic device 300 may include magnets 385a, 385b, and 385c for the purpose of fixing the electronic device 300 to a car cradle or attaching a card case to the rear surface of the electronic device 300. For example, a first magnet 385a may be located on the left side of the antenna structure 380 (e.g., the left side of the y-axis in FIG. 3C) and a second magnet 385b may be located on the right side of the antenna structure 380. The adhesive member 384 may be located under the first magnet 385a, the second magnet 385b, and the antenna structure 380 (e.g., when viewed from the z-axis direction in FIG. 3C). The heat dissipation and/or shielding member 385 may be located above the antenna structure 380. The first magnet 385a and the second magnet 385b do not overlap the heat dissipation and/or shielding member 385 (e.g., a graphite sheet) when viewed from the z-axis direction, and the heat dissipation and/or shielding member 385 may be located between the first and second magnets. Unlike the illustration, in some embodiments, at least one of the two magnets 358a and 385b may be disposed to overlap the heat dissipation and/or shielding member 385 when viewed from the z-axis direction.

In an embodiment, the first magnet 385a and the second magnet 385b may have symmetrical shapes. For example, the first magnet 385a and the second magnet 385b may be configured to be symmetrically convexly curved left and right. A third magnet 385c may be disposed under the antenna structure 380 (e.g., the -y-axis direction in FIG. 3) while not overlapping the antenna structure 380 (or the coil provided in the antenna structure 380) when viewed from the first direction (or the second direction). The third magnet 385c may have a rectangular shape as illustrated in FIG. 3C, but is not limited thereto. The width between the first magnet 385a and the second magnet 385b (e.g., the left-right width with reference to the y axis) may be smaller than the left-right width W of the first housing structure 310. Referring to FIG. 3A, the left-right width W of the first housing structure 310 may be defined as the length of a straight-line distance from the folding axis (axis A) to the periphery of the first housing structure 310.

Although not illustrated, at least one of the magnets 385a, 385b, and 385c may be attached to the first rear surface cover 340. For example, the magnets 385a, 385b, and 385c may be attached to the inner surface of the first rear surface cover 340 (the surface facing the antenna structure 380) while not overlapping the antenna structure 380 (or the coils provided in the antenna structure 380) when viewed from the first direction (or the second direction).

In an embodiment, the display 330 may include a display panel 331 (e.g., a flexible display panel), and at least one plate 332 or layer on which the display panel 331 is seated. In an embodiment, the at least one plate 332 may include a conductive plate (e.g., Cu sheet or SUS sheet) disposed between the display panel 331 and the support member assembly 360. According to an embodiment, the conductive plate may be configured to have substantially the same area as the display, and the area facing the folding area of the display may be configured to be bendable. The plate 332 may include at least one auxiliary material layer (e.g., a graphite member) disposed on the rear surface of the display panel 331. In an embodiment, the plate 332 may have a shape corresponding to that of the display panel 331. For example, a partial area of the first plate 332 may have a shape corresponding to the first area 331a, the second area 331b, and/or the folding area 331c of the display panel 331.

In an embodiment, the support member assembly 360 may include a first support member 361 (e.g., a first support plate), a second support member 362 (e.g., a second support plate), a hinge structure 364 disposed between the first support member 361 and the second support member 362, a hinge cover 365 configured to cover the hinge structure 364 when the hinge structure 264 is viewed from the outside, and at least one wiring member 363 (e.g., a flexible printed circuit board (FPCB)) extending across the first and second support members 361 and 362.

In an embodiment, the support member assembly 360 may be disposed between the plate 332 and the at least one printed circuit board 370. For example, the first support member 361 may be disposed between the first area 331a of the display 330 and a first printed circuit board 371. The second support member 362 may be disposed between the second area 331b of the display 330 and a second printed circuit board 372.

In an embodiment, the wiring member 363 and the hinge structure 364 may be at least partially disposed inside the support member assembly 360. The wiring member 363 may be disposed in a direction across the first support member 361 and the second support member 362 (e.g., the x-axis direction). The wiring member 363 may be arranged in a direction substantially perpendicular to the folding axis (e.g., the y axis or the folding axis A in FIG. 3A) of the folding area 331c (e.g., the x-axis direction).

In an embodiment, as described above, the at least one printed circuit board 370 may include the first printed circuit board 371 disposed on the first support member 361 side and the second printed circuit board 372 disposed on the second support member 362 side. The first printed circuit board 371 and the second printed circuit board 372 may be disposed in a space defined by the support member assembly 360, the first housing structure 310, the second housing structure 320, the first rear surface cover 340, and the second rear surface cover 350. Components for implementing various functions of the electronic device 300 may be mounted on the first printed circuit board 371 and the second printed circuit board 372. For example, the MST communication module 210, the NFC communication module 230, or the wireless charging module 250 of FIG. 2 may be disposed on the first printed circuit board 371 and may be electrically connected to an antenna provided in the antenna structure 380.

In an embodiment, in the first space of the first housing structure 310, the first printed circuit board 371 disposed in the space defined via the first support member 361, a first battery 391 disposed at a position facing a first swelling hole 3611 in the first support member 361, at least one sensor module 381, or at least one camera module 382 may be included. The first housing structure 310 may include a window glass 383 disposed to protect the at least one sensor module 381 and the at least one camera module 382 at a position corresponding to at least one of the first area 331a, the second area 331b, and the folding area 331c of the display 330. In an embodiment, in the second space of the second housing structure 320, the second printed circuit board 372 disposed in the second space provided via the second support member 362 and a second battery 392 disposed at a position facing a second swelling hole 3621 in the second support member 362 may be included. According to an embodiment, the first housing structure 310 and the first support member 361 may be configured integrally with each other. According to an embodiment, the second housing structure 320 and the second support member 362 may also be configured integrally with each other. According to an embodiment, in the second space of the second housing structure 320, a sub-display 352 may be disposed. According to an embodiment, the sub-display 352 (e.g., the second display) may be disposed on the second rear surface cover 350 to be visible from the outside. For example, the sub-display 352 may be exposed to the outside through most of the second rear surface cover 350.

In an embodiment, the first housing structure 310 may include a first rotation support surface 314, and the second housing structure 320 may include a second rotation support surface 324, which corresponds to the first rotation support surface 314. Each of the first rotational support surface 314 and the second rotation support surface 324 may include a curved surface corresponding to a curved surface included in the hinge cover 365.

In an embodiment, when the electronic device 300 is in the unfolded state (e.g., the state of FIG. 3A), the first rotation support surface 314 and the second rotation support surface 324 may cover the hinge cover 365 to prevent the hinge cover 365 from being exposed to the rear surface of the electronic device 300 or to minimally expose the hinge cover 365 to the rear surface of the electronic device 300. In an embodiment, when the electronic device 300 is in the folded state (e.g., the state of FIG. 3B), the first rotation support surface 314 and the second rotation support surface 324 may rotate along the curved surface included in the hinge cover 365 to expose the hinge cover 365 to the rear surface of the electronic device 300 as much as possible.

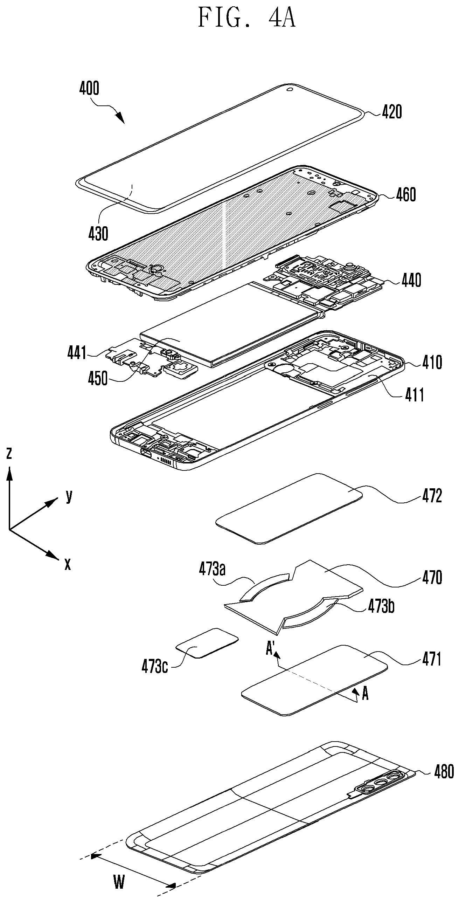

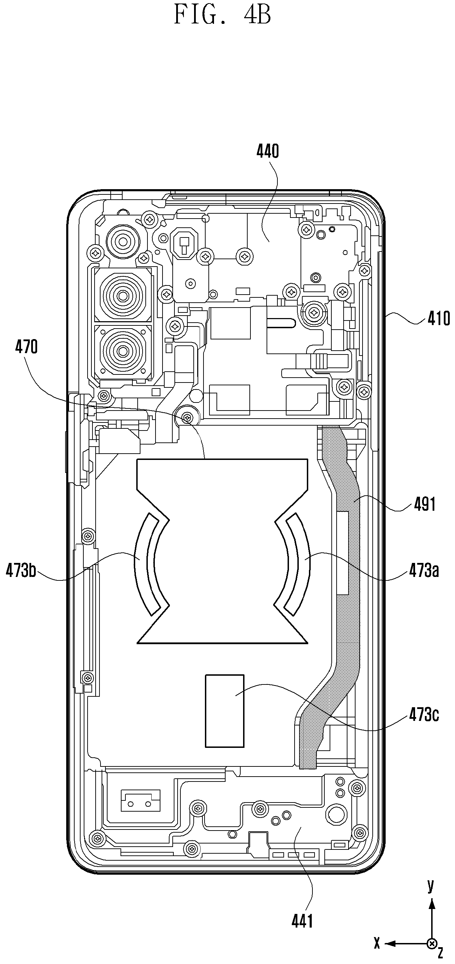

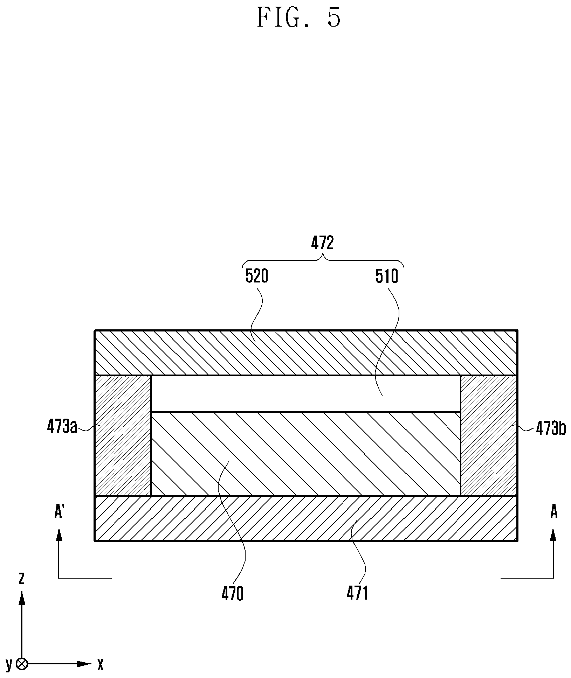

FIG. 4A is an exploded perspective view of an electronic device 400 according to an embodiment. FIG. 4B is a view illustrating the structure illustrated in FIG. 4A and electrical connection members disposed adjacent thereto. FIG. 5 is a cross-sectional view of the structure illustrated in FIG. 4A, taken in direction A-A'. Referring to FIG. 4A, the electronic device 400 (e.g., the electronic device 101 in FIG. 1) may include a side surface bezel structure 410, a first support member (or first frame) 411, a front surface plate (or front surface cover) 420, a display 430, one or more printed circuit boards 440 and 441, a battery 450, a second support member (or second frame) 460, an antenna structure 470, and a rear surface plate (or a rear surface cover) 480. The front surface plate 420 may define a first surface (or the front surface) of the electronic device 400 that faces a first direction, the rear surface plate 480 may define a second surface (or the rear surface) of the electronic device 400 that faces a second direction opposite to the first direction, and the side bezel structure 410 may define a side surface surrounding the space between the first surface and the second surface. According to an embodiment, a structure including the first surface, the second surface, and the side surface may be referred to as a housing structure. In some embodiments, at least one of the components (e.g., the first support member 411 or the second support member 460) may be omitted from the electronic device 400, or other components may be additionally included in the electronic device 400.

In an embodiment, the one or more printed circuit boards 440 and 441 may be disposed to be supported by the first support member 411 and/or the second support member 460. The first support member 411 may be disposed inside the electronic device 400 to be connected to the side surface bezel structure 410 or may be configured integrally with the side surface bezel structure 410. The first support member 411 may be made of, for example, a metal material and/or a non-metal (e.g., polymer) material. The second support member 460 may have one surface to which the display 430 is coupled, and the other surface to which the one or more printed circuit boards 440 and 441 are coupled. On the one or more printed circuit boards 440 and 441, a processor, a memory, and/or an interface may be mounted. According to an embodiment, the one or more printed circuit boards 440 and 441 may include a main board 440 and a sub-board 441. The processor may include one or more of, for example, a central processor, an application processor, a graphics processor, an image signal processor, a sensor hub processor, or a communication processor. The memory may include, for example, a volatile memory or a non-volatile memory.

According to an embodiment, the interface may include, for example, a high-definition multimedia interface (HDMI), a universal serial bus (USB) interface, an SD card interface, and/or an audio interface. The interface may electrically or physically connect, for example, the electronic device 400 to an external electronic device and may include a USB connector, an SD card/MMC connector, or an audio connector.

In an embodiment, the battery 450 may be disposed to be supported by the first support member 411 and/or the second support member 460. The battery 450 is a device for feeding power to at least one component of the electronic device 400 and may include, for example, a non-rechargeable primary battery, a rechargeable secondary battery, or a fuel cell. At least a portion of the battery 450 may be disposed on substantially the same plane as, for example, the one or more printed circuit boards 440 and 441. The battery 450 may be integrally disposed inside the electronic device 400 or may be detachably disposed on the electronic device 400.

In an embodiment, the antenna structure 470 (e.g., the antenna structure 380 in FIG. 3) may include an antenna (e.g., the MST antenna 297-1, the NFC antenna 297-3, and/or the wireless charging antenna 297-5 in FIG. 2). Here, the antenna may be a planar type (or spiral type) coil having one or more patterns wound one or more times in a clockwise or counterclockwise direction around an axis substantially parallel to the first direction (or second direction). The antenna structure 470 may be disposed between the rear surface plate 480 and the printed circuit board 440. The antenna structure 470 may include a plurality of layers, and the antenna may be partially provided in the plurality of layers. An adhesive member 471 (e.g., the adhesive member 384 of FIG. 3) may be attached to a surface of the antenna structure 470 that faces the rear surface plate 480. A heat dissipation and shielding member 472 (e.g., member 385 of FIG. 3) may be disposed on a surface of the antenna structure 470 that faces the printed circuit board 440. As illustrated in FIG. 5, the heat dissipation and shielding member 472 may include a shielding sheet 510 (e.g., a nanocrystal sheet) and a heat dissipation sheet 520 (e.g., a graphite sheet).

Referring to FIGS. 4A, 4B, and 5, the electronic device 400 may include magnets 473a, 473b, and 473c. For example, a first magnet 473a may be located on the left side of the antenna structure 470 (e.g., the left side with reference to the y-axis) and a second magnet 473b may be located on the right side of the antenna structure 470. An adhesive member 471 may be located below the first magnet 473a and the second magnet 473b (e.g., when viewed from the z-axis direction). A heat dissipation sheet 520 may be placed on the first magnet 473a and the second magnet 473b. A shielding sheet 510 may be disposed between the heat dissipation sheet 520 and the antenna structure 470. The shielding sheet 510 may be located between the first magnet 473a and the second magnet 473b while not overlapping the first and second magnets when viewed from the z-axis direction. Unlike the illustration, in some embodiments, at least one of the two magnets 473a and 473b may be disposed to at least partially overlap the shielding sheet 510 when viewed from the z-axis direction. The magnets 473a, 473b, and 473c may be used in various ways. For example, the magnets may be included in the electronic device 400 for the purpose of fixing the electronic device 400 to a car cradle or a charging pad or attaching a card case to the rear surface of the electronic device 400.

In an embodiment, the first magnet 473a and the second magnet 473b may have symmetrical shapes. For example, the first magnet 473a and the second magnet 473b may be configured to be symmetrically convexly curved left and right. The width between the first magnet 473a and the second magnet 473b (e.g., the left-right width with reference to the y axis) may be smaller than the left-right width W of the housing structure.

In an embodiment, a third magnet 473c may be disposed under the antenna structure 470 (e.g., the -y-axis direction in FIG. 4) while not overlapping the antenna structure 470 (or the coil provided in the antenna structure 470) when viewed from the first direction (or the second direction). The third magnet 473c may have a rectangular shape as illustrated in FIG. 4 but is not limited thereto.

In an embodiment, the electronic device 400 may include a connection member 491 which electrically interconnects the main board 440 and the sub board 441. For example, the connection member 491 may include a signal line configured to output an RF signal from a wireless communication circuit to an antenna and to output an RF signal received from the antenna to the wireless communication circuit. The connection member 491 may be implemented with an RF coaxial cable or a flexible printed circuit board ((FPCB)-type RF cable (FRC)). Referring to FIG. 4B, when viewed in the z-axis direction, the connection member 491 may extend long in the y-axis direction while not overlapping the magnets 473a, 473b, and 473c and the antenna structure 470.

Although not illustrated, at least one of the magnets 473a, 473b, and 473c may be attached to the first rear surface cover 340. For example, the magnets 473a, 473b, and 473c may be attached to the inner surface of the first rear surface cover 340 (the surface facing the antenna structure 470) while not overlapping the antenna structure 470 (or the coils provided in the antenna structure 470) when viewed from the first direction (or the second direction).

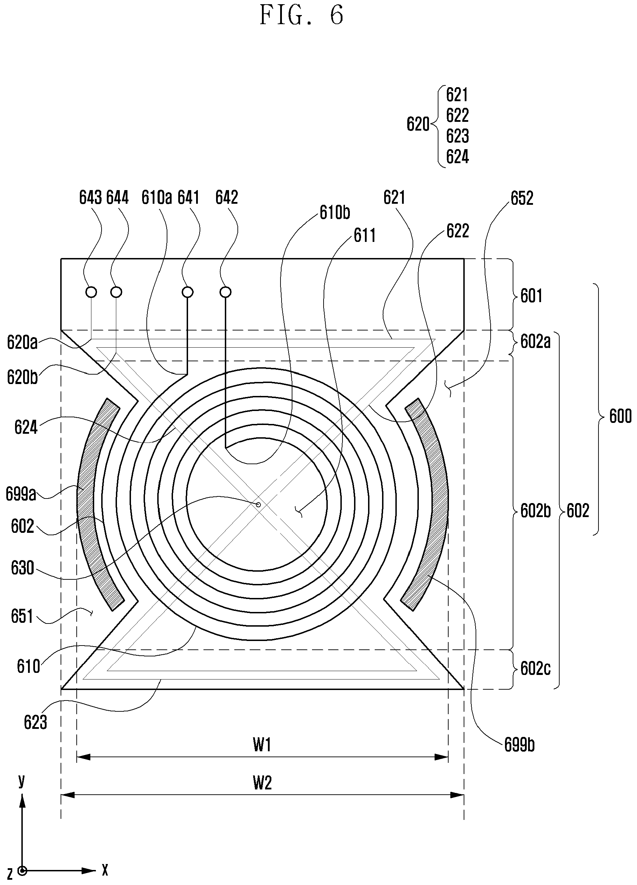

FIG. 6 is a front view of an antenna structure according to an embodiment.

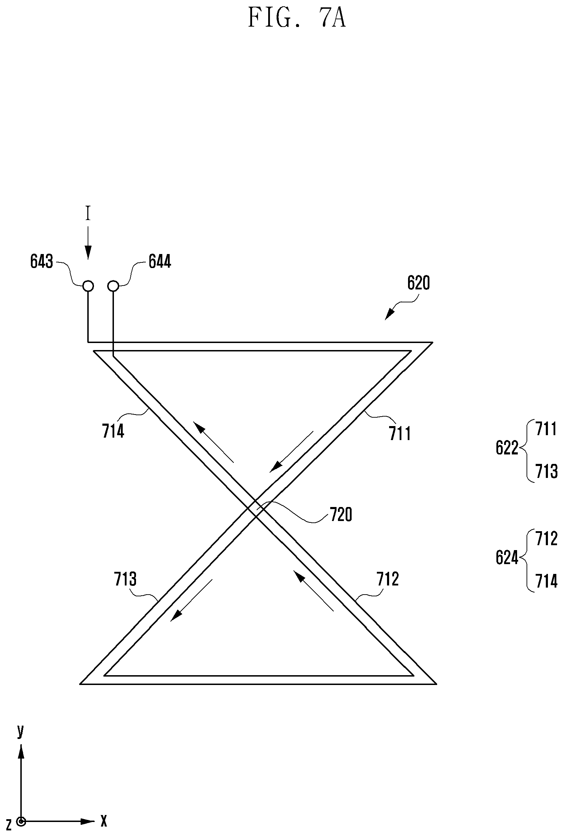

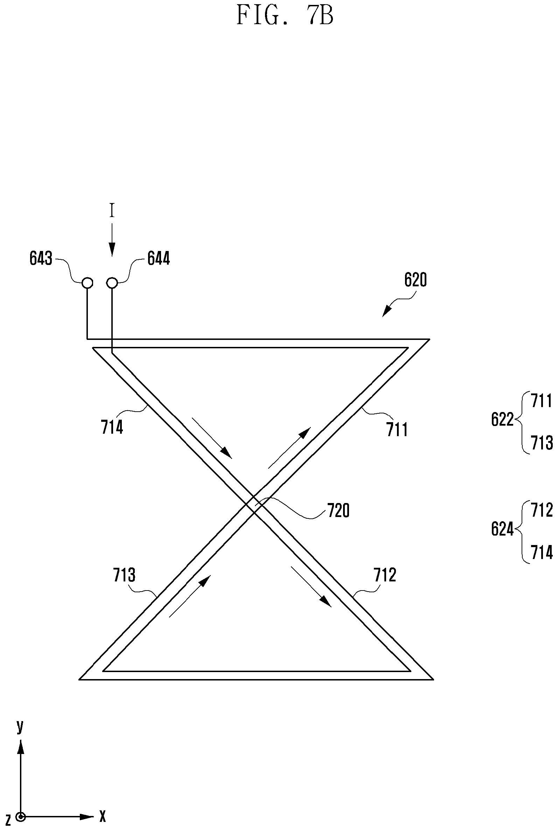

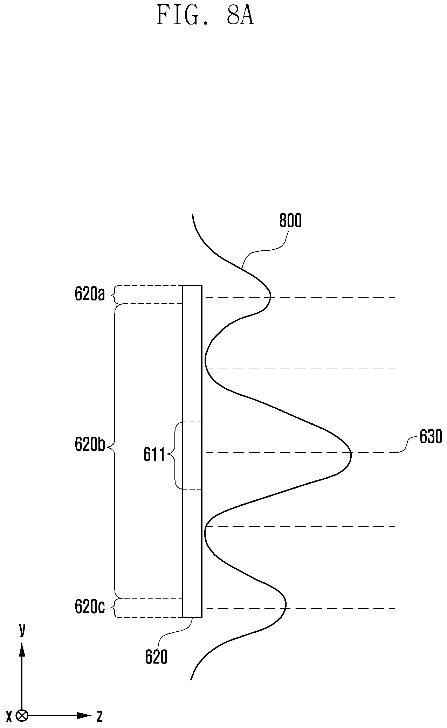

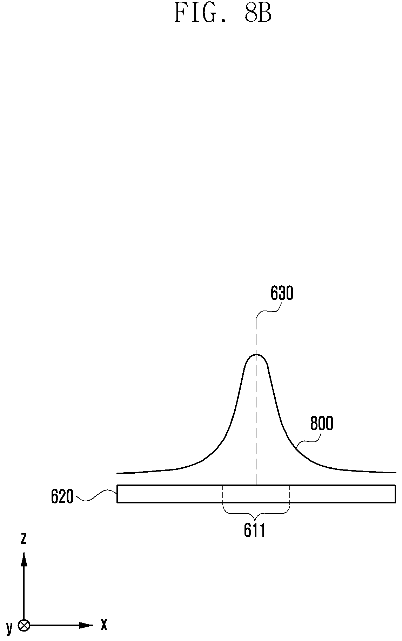

FIGS. 7A and 7B are views illustrating directions of current in a coil disposed in the antenna structure of FIG. 6. FIGS. 8A and 8B are views showing the strength of a magnetic field induced by the coil.

Referring to FIG. 6, an antenna structure 600 (e.g., the antenna structure 380 in FIG. 3 or the antenna structure 470 in FIG. 4) may include a first coil 610 and a second coil 620. The first coil 610 may be a coil for supporting wireless charging (e.g., the wireless charging antenna 297-5 in FIG. 2). The second coil 620 may be a coil for transmitting and/or receiving a signal of a frequency band designated to be used for NFC communication (e.g., the NFC antenna 297-3 in FIG. 2).

In an embodiment, the first coil 610 may be provided on the antenna structure 600 in a form of being wound several times in a loop shape in a clockwise (or counterclockwise) direction around a first axis 630 parallel to the z-axis direction. One end 610a of the first coil 610 may be connected to a first pad 641 and the other end 610b of the first coil 610 may be connected to a second pad 642. For example, the antenna structure 600 may be divided into a first portion (or upper portion) 601 where the pads are located and a second portion (or lower portion) 602 where the coil is located under the first portion 601 as illustrated in FIG. 6. The first pad 641 and the second pad 641 may be disposed in the first portion 601 of the antenna structure 600. The first pad 641 and the second pad 642 may be electrically connected to a wireless charging circuit (e.g., the wireless charging module 250 in FIG. 2). For example, the first pad 641 and the second pad 642 may be connected to the wireless charging circuit via a connector disposed on a printed circuit board (e.g., the main board 440 in FIGS. 4A and 4B). As a current is fed to the first pad 641 or the second pad 642 from the wireless charging circuit, a magnetic flux is induced in the first coil 610 in the z-axis direction, thereby generating a magnetic field around the antenna structure 600.

In an embodiment, the second coil 620 may be provided on the antenna structure 600 in a structure in which two figures (e.g., triangles) are symmetrically arranged up and down with a vertex at one point (e.g., the center where the first axis 630 is located) in a space 611 defined inside the first coil 610. For example, the second portion 602 may be divided into an upper portion 602a, a central portion 602b, and a lower portion 602c. The first coil 610 may be disposed in the central portion 602b. The second coil 620 may include a first pattern 621 having a structure extending from the left side of the upper portion 602a to the right side of the upper portion 602a, a second pattern 622 having a structure extending from the end of the first pattern 621 located on the right side of the upper portion 602a to the left side of the lower portion 602c across the space 611 inside the first coil 610, a third pattern 623 having a structure extending substantially parallel to the first pattern 621 from the end of the second pattern 622 located on the left side of the lower portion 602c to the right side of the lower portion 602c, and a fourth pattern 624 having a structure extending from the end of the third pattern 623 located on the right side of the lower portion 602c to the left side of the upper part 602a across the inner space 611. The first pattern 621 may be referred to as an upper pattern, the third pattern 623 may be referred to as a lower pattern, and the other patterns 622 and 624 may be referred to as a central pattern or an X-shaped pattern. The second coil 620 in the inner space 611 is illustrated as the X shape, but is not limited to this shape. For example, the second coil may be provided in the inner space 611 in a shape extending roundly along the round inner circumferential surface of the inner space 611.

In an embodiment, a third pad 643 and a fourth pad 644 may be disposed in the first portion 601 of the antenna structure 600. One end 620a of the second coil 620 may be connected to the third pad 643. The other end 620b of the second coil 620 may be connected to the fourth pad 644. The third pad 643 and the fourth pad 644 may be electrically connected to a wireless communication circuit (e.g., the NFC communication module 230 in FIG. 2). For example, the third pad 643 and the fourth pad 644 may be connected to the wireless communication circuit via a connector disposed on a printed circuit board (e.g., the main board 440 in FIGS. 4A and 4B). As a current is fed to the third pad 643 or the fourth pad 644 from the wireless communication circuit, a magnetic flux is induced in the second coil 620 in the z-axis direction, thereby generating a magnetic field around the antenna structure 600.

In an embodiment, the first magnet 699a (e.g., the first magnet 385a in FIG. 3C and the first magnet 473a in FIG. 4) may be disposed adjacent to the left edge of the first coil 610 while not overlapping the coils 610 and 620. The second magnet 699b (e.g., the second magnet 385b in FIG. 3C and the second magnet 473b in FIG. 4) may be disposed adjacent to the right edge of the first coil 610 while not overlapping the coils 610 and 620. For example, in the second portion 602 of the antenna structure 600, the central portion 602b may have the left and right sides recessed into the inner space 611 compared to the upper and lower portions 602a and 602c. Accordingly, a recessed first outer space 651 is provided on the left side of the central portion 602b, and at least a portion of the first magnet 699a may be located there. A recessed second outer space 652 is provided on the right side of the central portion 602b, and at least a portion of the second magnet 699b may be located there.

In the embodiment of FIG. 6, the entirety of the first magnet 699a may be located in the first outer space 651 and the entirety of the second magnet 699b may be located in the second outer space 652. The first magnet 699a and the second magnet 699b are not limited to the shapes illustrated in FIG. 6, but may have symmetrically convexly curved shapes. Although not illustrated, a third magnet (e.g., the third magnet 385c in FIG. 3C and the third magnet 473c in FIG. 4) may be disposed adjacent to the lower portion 602c. In an embodiment, the fourth magnet may be disposed in the inner space 611 not to overlap the first coil 610 and the second coil 620 when viewed in the z-axis direction. In another embodiment, the first magnet 699a and the second magnet 699b may be provided on the antenna structure 600. For example, the antenna structure 600 may be configured in a structure extending to the first outer space 651 and the second outer space 652. The first magnet 699a and the second magnet 699b may be provided in portions of the antenna structure corresponding to the first outer space 651 and the second outer space 652.

According to the embodiment of FIG. 6, the left-right width W1 between the first magnet 699a and the second magnet 699b may be smaller than (or equal to) the left-right width W2 of the antenna structure 600. The left-right width W2 of the antenna structure 600 may be smaller than the left-right width of the housing of the electronic device to be equipped with the antenna structure 600. For example, the left-right width W2 of the antenna structure 600 may be smaller than the width W in FIG. 3A or the width W in FIG. 4. According to another embodiment, although not illustrated, W1 may be greater than W2 but may be smaller than the left-right width of the housing (e.g., the width W in FIG. 3A or the width W in FIG. 4).

In an embodiment, the magnetic field induced by the second coil 620 may be strongly formed in the area where the second pattern 622 and the fourth pattern 624 intersect (e.g., the space 611 defined inside the first coil 610). Referring to FIG. 7A, there may be provided a current flow path in which, when a current is fed to the third pad 643, the current converges to an intersection point 720 from a portion 711 located at the upper right end of the second pattern 622 (e.g., the right side with reference to the y axis and the upper end with reference to the x axis) and a lower right end portion 712 of the fourth pattern 624, and then the current diverges from the intersection point 720 to a portion 713 located at the lower left end of the second pattern 622 and a portion 714 located at an upper left end of the fourth pattern 624. Referring to FIG. 7B, there may be provided a current flow path in which, when a current is supplied to the fourth pad 644, the current converges to the upper left end portion 714 of the fourth pattern 624 and the lower left end portion 713 of the second pattern 622, and then the current diverges from the intersection point 720 to the upper right end portion 711 of the second pattern 622 and the lower left end portion 712 of the fourth pattern 624. Referring to FIGS. 8A and 8B, a magnetic field 800 may be strongly formed in the space 611 where the intersection point 720 is located by the current path which converges to the intersection point 720 and then diverges from the intersection point 720, as described above. Since the antenna structure 600 is disposed inside the housing such that the space 611 is located in the center of the housing, the magnetic field 800 may be concentrated to the center of the housing. For example, when the central portion of the housing is adjacent to a card reader (e.g., a point of sale (POS) reader), the recognition rate (e.g., payment success rate) of short-range wireless communication using the second coil 620 may increase.

In an embodiment, the antenna structure 600 may include a plurality of layers. For example, a portion (e.g., most) of the first coil 610 may be provided on the first layer, and another portion overlapping the second coil 620 when viewed in the z-axis direction in FIG. 6 may be provided on the second layer. The above-mentioned another portion may be connected to the above-mentioned portion via conductive vias. A portion of the second coil 620 may be provided on the first layer and another portion may be provided on the second layer. For example, the first pattern 621, the second pattern 622, and the third pattern 623 of the second coil 620 may be provided on the first layer, and the fourth pattern 624 of the second coil 620 may be provided on the second layer. As another example, the first pattern 621, the third pattern 623, and the fourth pattern 624 of the second coil 620 may be provided on the first layer, and the second pattern 624 of the second coil 620 may be provided on the second layer. The above-mentioned another portion of the second coil 620 may be connected to the above-mentioned portion of the second coil 620 via vias.

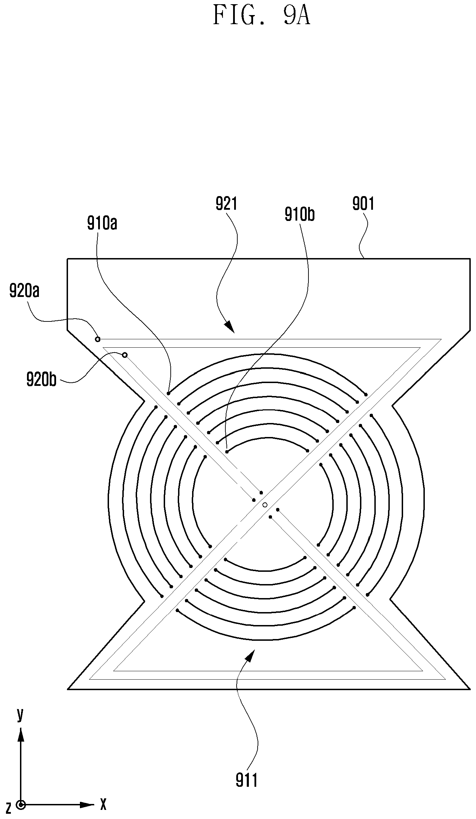

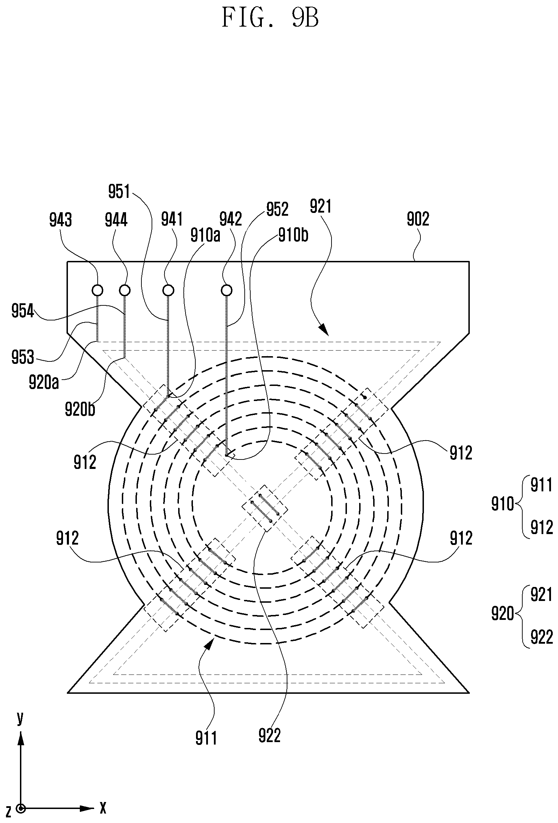

FIG. 9A is a view illustrating a first layer of an antenna structure according to an embodiment, and FIG. 9B is a view illustrating a second layer of the antenna structure. For convenience of description, components overlapping those of FIG. 6 will not be described or will be described briefly.

Referring to FIGS. 9A and 9B, a first coil 910 (e.g., the first coil 610 in FIG. 6) may be divided into a (1-1)th portion 911 provided on the first layer 901 and a (1-2)th portion 912 provided on the second layer 902. A second coil 920 (e.g., the second coil 620 in FIG. 6) may be divided into a (2-1)th portion 921 provided on the first layer 901 and a (2-2)th portion 922 provided on the second layer 902. When viewed in the z-axis direction, the first layer 901 may be a lower layer and the second layer 902 may be an upper layer. Of course, the reverse is also possible. Although not illustrated, in another embodiment, the (1-1)th portion 911 may be provided on the second layer 902, and the (1-2)th portion 912 may be provided on the first layer 901.

In an embodiment, the (1-2)th portion 912 of the first coil 910 at least partially intersects the (2-1)th portion 921 of the second coil 920 when viewed in the z-axis direction, and may be connected to the (1-1)th portion 911 via vias.

In an embodiment, the (2-2)th portion 922 of the second coil 920 at least partially intersects the (2-1)th portion 921 of the second coil 920 when viewed in the z-axis direction, and may be connected to the (2-1)th portion 921 via vias.

In an embodiment, the first pad 941 and the second pad 942 may be provided on the second layer 902. A first wiring line 951, which connects the first pad 941 to one end 910a of the first coil 910, may be provided on the second layer 902. A second wiring line 952, which connects the second pad 942 to the other end 910b of the first coil 910, may be provided on the second layer 902.

In an embodiment, the third pad 943 and the fourth pad 944 may be provided on the second layer 902. A third wiring line 953, which connects the third pad 943 to one end 920a of the second coil 920, may be provided on the second layer 902. A fourth wiring line 954, which connects the fourth pad 944 to the other end 920b of the second coil 920, may be provided on the second layer 902.

Although not illustrated, in another embodiment, the pads 941, 942, 943, and 944 and the wiring lines 951, 952, 953, and 954 may be provided on another layer (e.g., a third layer).

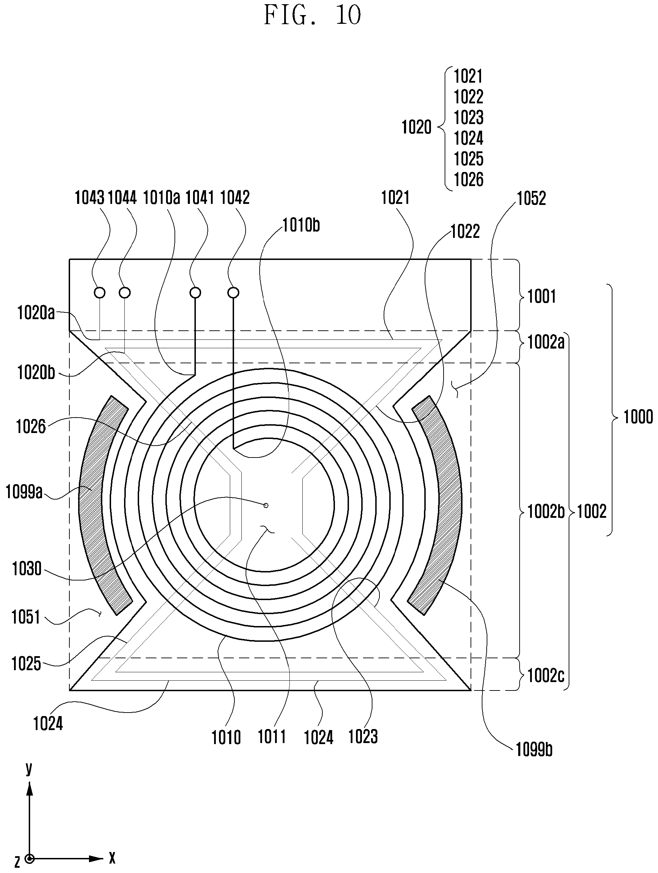

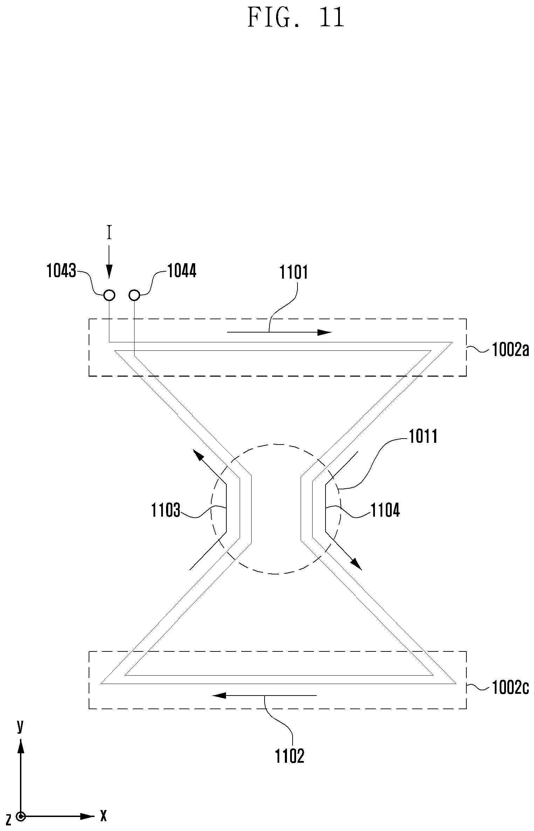

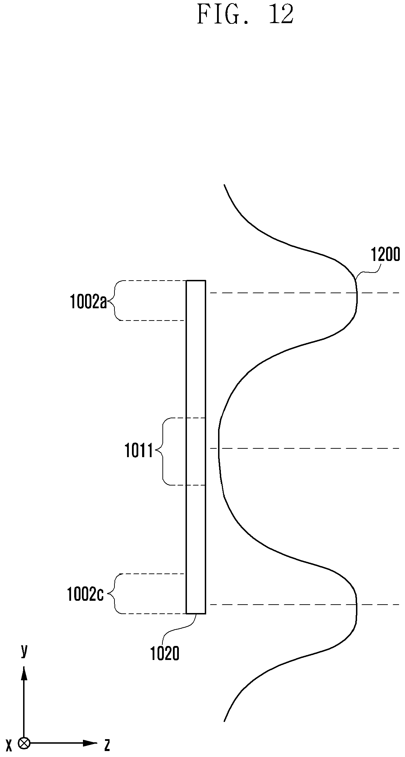

FIG. 10 is a front view of an antenna structure according to an embodiment. FIG. 11 is a view illustrating directions of current flowing in a coil disposed in the antenna structure of FIG. 10. FIG. 12 is a diagram showing the strength of a magnetic field induced by the coil. For convenience, a configuration and a structure overlapping the configuration and the structure of the antenna structure described above will not be described or will be briefly described.

Referring to FIG. 10, an antenna structure 1000 (e.g., the antenna structure 380 in FIG. 3 or the antenna structure 470 in FIG. 4) may include a first coil 1010 configured to support wireless charging and a second coil 1020 configured to support NFC communication.

In an embodiment, the first coil 1010 may be provided on the antenna structure 1000 in a structure of being wound round several times in a clockwise (or counterclockwise) direction around a first axis 1030 substantially parallel to the z-axis direction. The antenna structure 1000 may be divided into a first portion 1001 where the pads are located and a second portion 1002 where the coil is located under the first portion 1001 as illustrated in FIG. 10. The first pad 1041 and the second pad 1042 may be disposed in the first portion 1001 of the antenna structure 1000. One end 1010a of the first coil 1010 may be connected to a first pad 1041 and the other end 1010b of the first coil 1010 may be connected to a second pad 1042. The first pad 1041 and the second pad 1042 may be electrically connected to a wireless charging circuit (e.g., the wireless charging module 250 in FIG. 2). As a current is fed to the first pad 1041 or the second pad 1042 from the wireless charging circuit, a magnetic flux may be induced in the z-axis direction in the first coil 1010.

In an embodiment, the second coil 1020 may be provided on the antenna structure in a form in which two triangular containers (bowls for containing things), each of which has an open inlet, are arranged symmetrically up and down with reference to one point in a space 1011 defined inside the first coil 1010 (e.g., the center where the first axis 1030 is located). For example, the second portion 1002 may be divided into an upper portion 1002a, a central portion 1002b, and a lower portion 1002c. The first coil 1010 may be disposed in the central portion 1002b. The second coil 1020 may include a first pattern 1021 having a structure extending from the left side of the upper portion 1002a to the right side of the upper portion 1002a, a second pattern 1022 having a structure extending from the end of the first pattern 1021 located on the right side of the upper part 1002a to the inner space 1011, a third pattern 1023 having a structure extending from the end of the second pattern 1022 located in the inner space 1011 to the right side of the lower portion 1002c, a fourth pattern 1024 having a structure extending substantially in parallel to the first pattern 1021 from the end of the third pattern 1023 located on the right side of the lower portion 1002c to the left side of the lower portion 1002c, a fifth pattern 1025 having a structure extending from the end of the fourth pattern 1024 located on the left side of the lower portion 1002c to the inner space 1011 not to overlap the second pattern 1022, and a sixth pattern 1026 having a structure extending from the end of the fifth pattern 1025 located in the inner space 1011 to the left side of the upper portion 1002a. The first pattern 1021 may be referred to as an upper pattern, the fourth pattern 1024 may be referred to as a lower pattern, and other patterns 1022, 1023, 1025, and 1026 may be referred to as a central pattern.

In an embodiment, one end 1020a of the second coil 1020 may be connected to the third pad 1043. The other end 1020b of the second coil 1020 may be connected to the fourth pad 1044. The third pad 1043 and the fourth pad 1044 may be electrically connected to a wireless communication circuit (e.g., the NFC communication module 230 in FIG. 2). As a current is fed to the third pad 1043 or the fourth pad 1044 from the wireless communication circuit, a magnetic flux may be induced in the z-axis direction in the second coil 1020.

In an embodiment, the first magnet 1099a may be disposed adjacent to the left edge of the first coil 1010 while not overlapping the coils 1010 and 1020. The second magnet 1099b may be disposed adjacent to the right edge of the first coil 1010 while not overlapping the coils 1010 and 1020. For example, at least a portion of the first magnet 1099a may be located in a recessed first outer space 1051 provided on the left side of the central portion 1002b. At least a portion of the second magnet 1099b may be located in a recessed second outer space 1052 provided on the right side of the central portion 1002b. For example, the first magnet 1099a and the second magnet 1099b may be configured to be symmetrically convexly curved left and right. Although not illustrated, the third magnet may be disposed adjacent to the lower portion 1002c. In an embodiment, the fourth magnet may be disposed in the inner space 1011 not to overlap the first coil 1010 and the second coil 1020 when viewed in the z-axis direction.

In an embodiment, the magnetic field induced by the second coil 1020 may be strongly formed in the upper and lower portions 1002a and 1002c where the first pattern 1021 and the fourth pattern 1024 are located. Referring to FIGS. 11 and 12, when a current is fed to the third pad 1043 (or the fourth pad 1044), a one-way current flow path 1101 may be configured in the upper portion 1002a and the lower portion 1002c, but current flow paths 1103 and 1104 in opposite directions may be configured in the inner space 1011. Accordingly, a magnetic field 1200 may be weakly formed in the inner space 1011 located in the central portion 1002b and may be relatively strongly formed in the upper and lower portions 1002a and 1002c. When the second coil 1020 having this structure is applied to an electronic device, the recognition rate of short-range wireless communication may be increased via the upper and lower portions of the housing.

In an embodiment, the antenna structure 1000 may include a plurality of layers. For example, the first coil 1010 and the second coil 1020 may be provided on different layers, respectively. As another example, the second coil 1020 may be provided on a first layer. A portion (e.g., most) of the first coil 1010 may be provided on the first layer, and another portion overlapping the second coil 1020 when viewed in the z-axis direction in FIG. 10 may be provided on a second layer. The above-mentioned another portion may be connected to the above-mentioned portion via conductive vias.

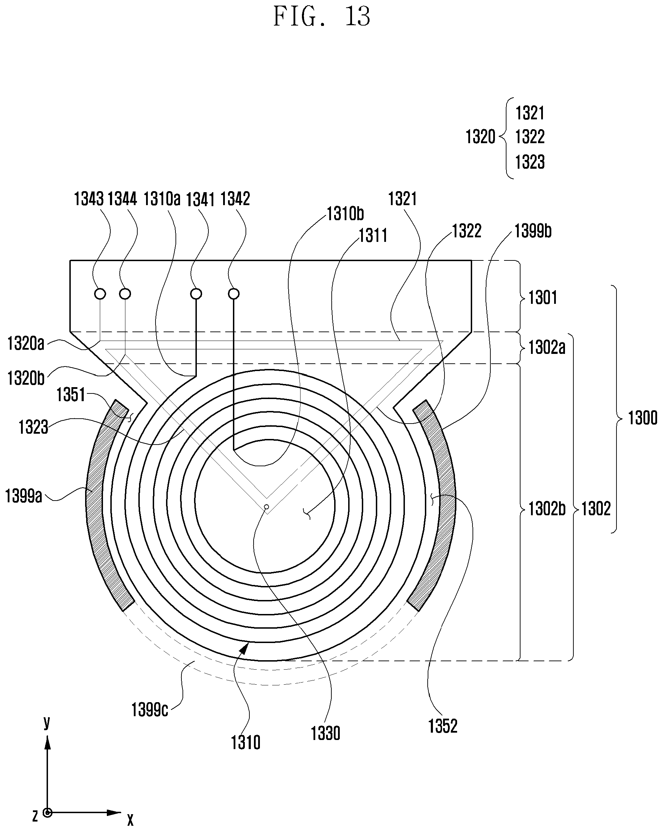

FIG. 13 is a front view of an antenna structure according to an embodiment. A configuration and a structure overlapping the configuration and the structure of the antenna structure described above will not be described or will be briefly described.

Referring to FIG. 13, an antenna structure 1300 may include a first coil 1310 configured to support wireless charging and a second coil 1320 configured to support NFC communication. The antenna structure 1300 may be disposed in place of the antenna structure 380 of FIG. 3 or the antenna structure 470 of FIG. 4.

In an embodiment, the first coil 1310 may be provided on the antenna structure 1300 in a structure of being wound round several times in a clockwise (or counterclockwise) direction around a first axis 1330 parallel to the z-axis direction. The antenna structure 1300 may be divided into a first portion 1301 where the pads are located and a second portion 1302 where the coil is located under the first portion 1301 as illustrated in FIG. 13. The first pad 1341 and the second pad 1342 may be disposed in the first portion 1301 of the antenna structure 1300. One end 1310a of the first coil 1310 may be connected to the first pad 1341 and the other end 1310b of the first coil 1310 may be connected to the second pad 1342. The first pad 1341 and the second pad 1342 may be electrically connected to a wireless charging circuit (e.g., the wireless charging module 250 in FIG. 2). As a current is fed to the first pad 1341 or the second pad 1342 from the wireless charging circuit, a magnetic flux may be induced in the z-axis direction in the first coil 1310.

In an embodiment, the second coil 1320 may be provided on the antenna structure 1300 in a structure of being wound several times in a clockwise (or counterclockwise) direction with a vertex at one point in the space 1311 defined inside the first coil 1310 (e.g., the center where the first axis 1330 is located). For example, the second portion 1302 may be divided into an upper portion 1302a and a lower portion 1302b. The first coil 1310 may be disposed on the lower portion 1302b. The second coil 1320 may include a first pattern 1321 having a structure extending from the left side of the upper portion 1302a to the right side of the upper portion 1302a, a second pattern 1322 extending from the right end of the first pattern 1321 to the inner space 1311, and a third pattern 1323 having a structure extending from the end of the second pattern 1322 located in the inner space 1311 to the left side of the upper part 1302a. One end 1320a of the second coil 1320 may be connected to the third pad 1343. The other end 1320b of the second coil 1320 may be connected to the fourth pad 1344. The third pad 1343 and the fourth pad 1344 may be electrically connected to a wireless communication circuit (e.g., the NFC communication module 230 in FIG. 2). As a current is fed to the third pad 1343 or the fourth pad 1344 from the wireless communication circuit, a magnetic flux may be induced in the z-axis direction in the second coil 1320.

In an embodiment, the first magnet 1399a may be disposed adjacent to the left edge of the first coil 1310 while not overlapping the coils 1310 and 1320. The second magnet 1399b may be disposed adjacent to the right edge of the first coil 1310 while not overlapping the coils 1310 and 1320. For example, at least a portion of the first magnet 1399a may be located in a recessed first outer space 1351 provided on the left side of the lower portion 1302b. At least a portion of the second magnet 1399b may be located in a recessed second outer space 1352 provided on the right side of the lower portion 1302b. For example, the first magnet 1399a and the second magnet 1399b may be configured to be symmetrically convexly curved left and right. Although not illustrated, the third magnet may be disposed adjacent to the lower portion 1302b. The fourth magnet may be disposed in the inner space 1311 not to overlap the first coil 1310 and the second coil 1320 when viewed in the z-axis direction. In another embodiment, at least a portion of a single magnet 1399c including the first magnet 1399a and the second magnet 1399b may be disposed adjacent to the periphery of the first coil 1310 while surrounding the first coil 1310.

In an embodiment, the antenna structure 1300 may include a plurality of layers. For example, the first coil 1310 and the second coil 1320 may be provided on different layers, respectively. As another example, the second coil 1320 may be provided on a first layer. A portion (e.g., most) of the first coil 1310 may be provided on the first layer, and another portion overlapping the second coil 1320 when viewed in the z-axis direction in FIG. 13 may be provided on a second layer. The above-mentioned another portion may be connected to the above-mentioned portion via conductive vias.

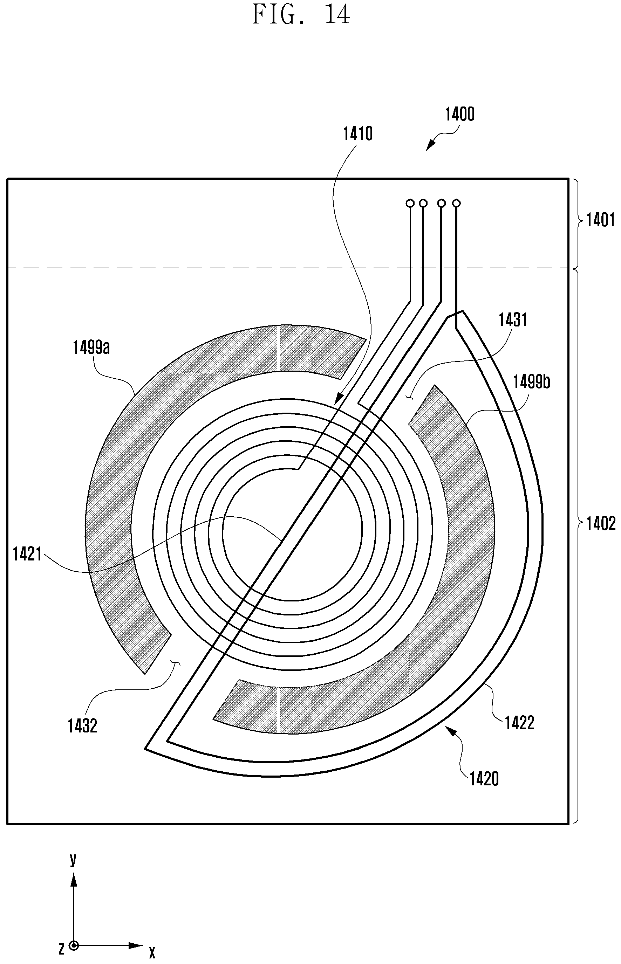

FIG. 14 is a front view of an antenna structure according to an embodiment. A configuration and a structure overlapping the configuration and the structure of the antenna structure of FIG. 13 will not be described or will be briefly described.

Referring to FIG. 14, an antenna structure 1400 may include a first coil 1410 configured to support wireless charging and a second coil 1420 configured to support NFC communication. For example, the antenna structure 1400 is divided into a first portion (or upper portion) 1401 where pads are located and a second portion (or lower portion) 1402 where the coils 1410 and 1420 are located. The first coil 1410 may have a structure of being wound several times around an axis parallel to the z-axis direction. The second coil 1420 may have a structure of being wound several times around an axis parallel to the z-axis direction. The antenna structure 1400 may be disposed in the electronic device instead of the antenna structure 380 of FIG. 3 or the antenna structure 470 of FIG. 4. The first magnet 1499a and the second magnet 1499b may be disposed adjacent to the coils 1410 and 1420 not to overlap the coils 1410 and 1420 with reference to the z-axis direction. The first magnet 1499a and the second magnet 1499b may be disposed in the electronic device instead of the magnets 385a and 385b of FIG. 3 or the magnets 473a and 473b of FIG. 4.

In an embodiment, the first magnet 1499a and the second magnet 1499b may have mutually symmetrical convex shapes. The first coil 1410 may be located in an inner space provided between the first magnet 1499a and the second magnet 1499b with reference to the z-axis direction. The second coil 1420 may be configured such that, with reference to the z-axis direction, the second coil 1420 passes through the space between the first magnet 1499a and the second magnet 1499b and one of the magnets 1499a and 1499b is located in the second coil 1420. For example, the second coil 1420 may be configured in a structure in which with reference to the z-axis direction, the second coil 1420 passes through a first entrance (or first gap) 1431 and a second entrance (or second gap) 1432 entering the inner space and surrounds the convex edge of the second magnet 1499b. In the second coil 1420, the first pattern 1421, which passes through the space between the first magnet 1499a and the second magnet 1499b and at least partially overlaps the second coil 1420 with reference to the z-axis direction, has a straightly extending shape. The second pattern 1422 surrounding the convex edge of the second magnet 1499b may have a curved shape (e.g., a bent shape). However, the disclosure is not limited to the illustrated shape, and for example, the second coil 1420 may have a polygonal shape (e.g., a rectangular shape).

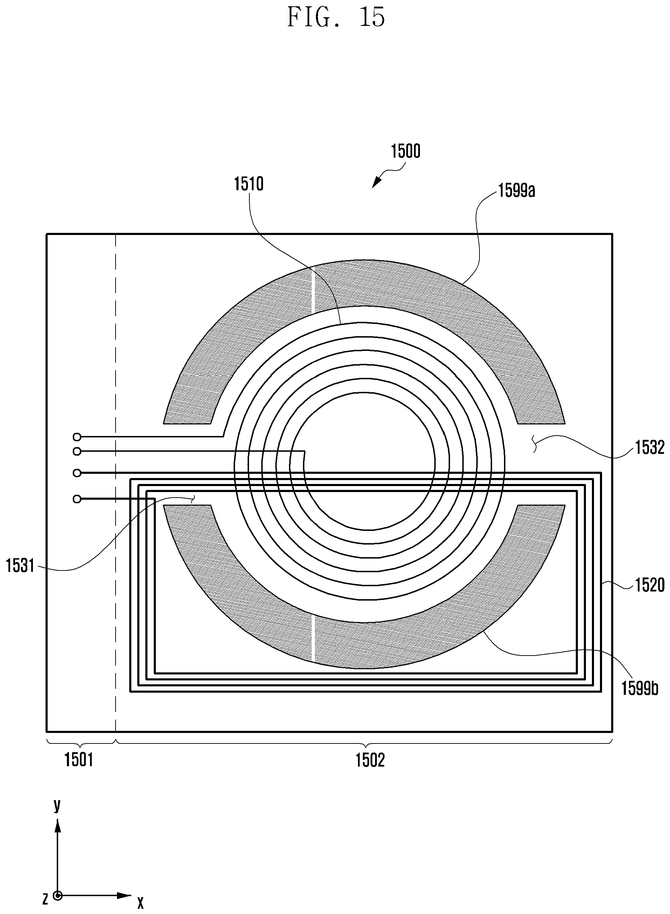

FIG. 15 is a front view of an antenna structure according to an embodiment. A configuration and a structure overlapping the configuration and the structure of the antenna structure of FIG. 14 will not be described or will be briefly described.

Referring to FIG. 15, an antenna structure 1500 may include a first coil 1510 configured to support wireless charging and a second coil 1520 configured to support NFC communication. For example, the antenna structure 1500 is divided into a first portion (or left portion) 1501 where pads are located and a second portion (or right portion) 1502 where the coils 1510 and 1520 are located. The first magnet 1599a and the second magnet 1599b may be disposed adjacent to the coils 1510 and 1520 not to overlap the coils 1510 and 1520 with reference to the z-axis direction. For example, the first magnet 1599a and the second magnet 1599b may be symmetrically disposed up and down around the first coil 1520. The second coil 1520 may be configured such that, with reference to the z-axis direction, the second coil 1420 passes through the space between the first magnet 1599a and the second magnet 1599b and one of the magnets 1599a and 1599b is located in the second coil 1420. For example, the second coil 1520 may be configured in a structure passing through a left entrance (or left gap) 1531 and a right entrance (or right gap) 1532 and surrounding the convex edge of the second magnet when viewed in FIG. 15. As illustrated, the second coil 1520 may have a rectangular shape and may be configured in various other shapes.

An electronic device according to various embodiments may include a housing including a front surface, a rear surface, and a side surface surrounding the front surface and the rear surface, a first magnet (e.g., the first magnet 385a in FIG. 3A and the first magnet 473a in FIG. 4) and a second magnet (e.g., the second magnet 385b in FIG. 3A and the second magnet 473b in FIG. 4) located inside the housing while not overlapping each other when viewed from the rear surface, preferably in a direction perpendicular to the rear surface, a first coil having a structure located between the first magnet and the second magnet and wound several times around a first axis perpendicular to the rear surface not to overlap the first magnet and the second magnet when viewed from the rear surface, preferably in a direction perpendicular to the rear surface, and a second coil located inside the housing not to overlap the first magnet and the second magnet and to overlap the first coil when viewed from the rear surface, preferably in a direction perpendicular to the rear surface, wherein the second coil has a structure passing through a space between the first magnet and the second magnet.

When viewed from the rear surface, preferably in a direction perpendicular to the rear surface, the second coil may include an upper pattern having a structure extending straight from left to right above the first coil while not overlapping the first coil, a lower pattern having a structure extending in parallel to the upper pattern from left to right under the first coil while not overlapping the first coil, and a central pattern having a structure extending from the upper pattern to the lower pattern via an inner space defined inside the first coil.

The central pattern may include a first central pattern (e.g., the second pattern 622 in FIG. 6) having a structure extending from a right end of the upper pattern to a left end of the lower pattern across the inner space, and a second central pattern (e.g., the fourth pattern 624 in FIG. 6) having a structure extending from a right end of the lower pattern to a left end of the upper pattern across the inner space.

The central pattern may include a first central pattern (e.g., the second pattern 1022 in FIG. 10) having a structure extending from a right end of the upper pattern to the inner space, a second central pattern (e.g., the third pattern 1023 in FIG. 10) having a structure extending from an end of the first central pattern located in the inner space to a right end of the lower pattern, a third central pattern (e.g., the fifth pattern 1025 in FIG. 10) having a structure extending from a left end of the lower pattern to the inner space, and a fourth central pattern (e.g., the sixth pattern 1026 in FIG. 10) having a structure extending from an end of the third central pattern located in the inner space to a left end of the upper pattern.

The electronic device may further include an antenna structure divided into an upper portion, a central portion, and a lower portion when viewed from the rear surface, preferably in a direction perpendicular to the rear surface. The first coil may be disposed in the central portion, the upper pattern of the second coil may be disposed in the upper portion, the lower pattern of the second coil may be disposed in the lower portion, and the central pattern of the second coil may be disposed in the central portion.

The central portion of the antenna structure may have, on the left and right sides thereof, a shape recessed into the inner space compared with the upper portion and the lower portion, the first magnet may be located in a first outer space of the recessed shape provided on the left side of the central portion, and the second magnet may be located in a second outer space of the recessed shape provided on the right side of the central portion.

The central pattern may include a first central pattern (e.g., the second pattern 622 in FIG. 6) having a structure extending from the right end of the upper pattern to the left end of the lower pattern across the inner space, and a second central pattern (e.g., the fourth pattern 624 in FIG. 6) having a structure extending from the right end of the lower pattern to the left end of the upper pattern across the inner space.

The antenna structure may include a plurality of layers, wherein one of the first central pattern and the second central pattern may be disposed on a first layer of the antenna structure together with the first coil, and another one of the first central pattern and the second central pattern may be disposed on a second layer of the antenna structure.

The central pattern may include a first central pattern (e.g., the second pattern 1022 in FIG. 10) having a structure extending from the right end of the upper pattern to the inner space, a second central pattern (e.g., the third pattern 1023 in FIG. 10) having a structure extending from an end of the first central pattern located in the inner space to the right end of the lower pattern, a third central pattern (e.g., the fifth pattern 1025 in FIG. 10) having a structure extending from the left end of the lower pattern to the inner space, and a fourth central pattern (e.g., the sixth pattern 1026 in FIG. 10) having a structure extending from an end of the third central pattern located in the inner space to the left end of the upper pattern.

The antenna structure may include a plurality of layers, and the first central pattern, the second central pattern, the third central pattern, and the fourth central pattern may be disposed on the same layer of the antenna structure.

The central pattern may have an X shape.

The electronic device may further include a third magnet located under the lower pattern when viewed from the rear surface, preferably in a direction perpendicular to the rear surface.

The electronic device may further include a fourth magnet located in the inner space not to overlap the first coil and the second coil when viewed from the rear surface, preferably in a direction perpendicular to the rear surface.

The first magnet and the second magnet may be configured to be round along a round periphery of the second coil.

The first coil may be configured to support wireless charging, and the second coil may be configured to support short-range wireless communication.

The housing may include a first housing (e.g., the first housing structure 310 in FIG. 3) and a second housing (e.g., the second housing structure 320 in FIG. 3) rotatable from the first housing, and the first coil, the second coil, the first magnet, and the second magnet may be accommodated in one of the first housing and the second housing.

An electronic device according to various embodiments may include a housing comprising a front surface, a rear surface, and a side surface surrounding the front surface and the rear surface, a first coil (e.g., the first coil 1310 in FIG. 13) accommodated inside the housing and having a structure of being wound several times around a first axis perpendicular to the rear surface when viewed from the rear surface, a second coil (e.g., the second coil 1320 in FIG. 13) accommodated inside the housing and overlapping the first coil when viewed from the rear surface and having a structure of being wound several times, a first magnet (e.g., the first magnet 1399a in FIG. 13) disposed adjacent to a left edge of the first coil while not overlapping the first coil and the second coil when viewed from the rear surface, and a second magnet (e.g., the second magnet 1399b in FIG. 13) disposed adjacent to a right edge of the first coil while not overlapping the first coil and the second coil when viewed from the rear surface. The second coil may include a first pattern having a structure extending straight from left to right above the first coil while not overlapping the first coil when viewed from the rear surface, a second pattern having a structure extending from the right end of the first pattern to an inner space defined inside the first coil, and a third pattern having a structure extending from an end of the second pattern located in the inner space to a place where the left end of the first pattern is located.

The first magnet and the second magnet may be configured to be round along a round periphery of the second coil. The second coil may have a triangular shape. The first coil may be configured to support wireless charging, and the second coil may be configured to support short-range wireless communication.

The embodiments of the disclosure disclosed in this specification and drawings merely present specific examples in order to easily describe the technical contents according to the embodiments of the disclosure and to help understanding of the embodiments of the disclosure, and are not intended to limit the scope of the embodiments of the disclosure.

## Claims

1. An electronic device comprising:
a housing comprising a front surface, a rear surface, and a side surface surrounding the front surface and the rear surface;
a first magnet (473a, 699a) and a second magnet (473b, 699b) located inside the housing while not overlapping each other in a view from the rear surface;
a first coil (610) having a structure located between the first magnet and the second magnet and wound several times around a first axis perpendicular to the rear surface not to overlap the first magnet and the second magnet in a view from the rear surface; and
a second coil (620) located inside the housing not to overlap the first magnet and the second magnet and to overlap the first coil in a view from the rear surface,
wherein the second coil has a structure passing through a space between the first magnet and the second magnet, wherein, in a view from the rear surface, the second coil (620) comprises:
an upper pattern (621) having a structure extending straight from left to right above the first coil while not overlapping the first coil;
a lower pattern (623) having a structure extending in parallel to the upper pattern from left to right under the first coil while not overlapping the first coil; and
a central pattern (622, 624) having a structure extending from the upper pattern to the lower pattern via an inner space (611) defined inside the first coil,
wherein the central pattern has an X shape.

2. An electronic device comprising:
a housing comprising a front surface, a rear surface, and a side surface surrounding the front surface and the rear surface;
a first magnet (473a, 699a) and a second magnet (473b, 699b) located inside the housing while not overlapping each other in a view from the rear surface;
a first coil (610) having a structure located between the first magnet and the second magnet and wound several times around a first axis perpendicular to the rear surface not to overlap the first magnet and the second magnet in a view from the rear surface; and
a second coil (620) located inside the housing not to overlap the first magnet and the second magnet and to overlap the first coil in a view from the rear surface,
wherein the second coil has a structure passing through a space between the first magnet and the second magnet, wherein, in a view from the rear surface, the second coil (620) comprises:
an upper pattern (621) having a structure extending straight from left to right above the first coil while not overlapping the first coil;
a lower pattern (623) having a structure extending in parallel to the upper pattern from left to right under the first coil while not overlapping the first coil; and
a central pattern (622, 624) having a structure extending from the upper pattern to the lower pattern via an inner space (611) defined inside the first coil,
wherein the central pattern (622, 624) comprises:
a first central pattern (1022) having a structure extending from a right end of the upper pattern to the inner space;
a second central pattern (1023) having a structure extending from an end of the first central pattern located in the inner space to a right end of the lower pattern;
a third central pattern (1025) having a structure extending from a left end of the lower pattern to the inner space; and
a fourth central pattern (1026) having a structure extending from an end of the third central pattern located in the inner space to a left end of the upper pattern.

3. The electronic device of claim 1, further comprising an antenna structure divided into an upper portion (602a), a central portion (602b), and a lower portion (602c) in a view from the rear surface,
wherein the first coil (610) is disposed in the central portion,
wherein the upper pattern (621) of the second coil (620) is disposed in the upper portion,
wherein the lower pattern (623) of the second coil (620) is disposed in the lower portion, and
wherein the central pattern (622, 624) of the second coil (620) is disposed in the central portion.

4. The electronic device of claim 3, wherein the central portion (602b) of the antenna structure has, on left and right sides thereof, a shape recessed into the inner space (611) compared with the upper portion and the lower portion,
wherein the first magnet is located in a first outer space (651) of the recessed shape provided on the left side of the central portion, and
wherein the second magnet is located in a second outer space (652) of the recessed shape provided on the right side of the central portion.

5. The electronic device of claim 3, wherein the central pattern comprises:
a first central pattern (622) having a structure extending from a right side of the upper portion to a left side of the lower portion across the inner space; and
a second central pattern (624) having a structure extending from a right side of the lower portion to a left side of the upper portion across the inner space.

6. The electronic device of claim 5, wherein the antenna structure comprises a plurality of layers,
wherein one of the first central pattern (622) and the second central pattern (624) is disposed on a first layer of the antenna structure together with the first coil, and
wherein another one of the first central pattern and the second central pattern is disposed on a second layer of the antenna structure.

7. The electronic device of claim 3, wherein the central pattern comprises:
a first central pattern (622, 1022) having a structure extending from a right side of the upper portion to the inner space;
a second central pattern (624, 1023) having a structure extending from an end of the first central pattern located in the inner space to a right side of the lower portion;
a third central pattern (622, 1025) having a structure extending from a left side of the lower portion to the inner space; and
a fourth central (624, 1026) pattern having a structure extending from an end of the third central pattern located in the inner space to a left side of the upper portion,
wherein the antenna structure comprises a plurality of layers, and
wherein the first central pattern, the second central pattern, the third central pattern, and the fourth central pattern are disposed on a same layer of the antenna structure.

8. The electronic device of claim **1,** further comprising a third magnet located under the lower pattern in a view from the rear surface.

9. The electronic device of claim 1, further comprising a fourth magnet located in the inner space not to overlap the first coil and the second coil in a view from the rear surface.

10. The electronic device of claim 1, wherein the first magnet and the second magnet are configured to be round along a round periphery of the second coil.

11. The electronic device of claim 1, wherein the first coil is configured to support wireless charging, and
wherein the second coil is configured to support short-range wireless communication.

12. The electronic device of claim 1, wherein the housing comprises a first housing and a second housing rotatable from the first housing, and
the first coil, the second coil, the first magnet, and the second magnet are accommodated in one of the first housing and the second housing.

## Patentansprüche

1. Elektronische Vorrichtung, die Folgendes umfasst:
ein Gehäuse umfassend eine vordere Fläche, eine hintere Fläche, und einer Seitenfläche, welche die vordere Fläche und die hintere Fläche umgibt;
einen ersten Magneten (473a, 699a) und einen zweiten Magneten (473b, 699b), die sich innerhalb des Gehäuses befinden und sich in einer Ansicht von der hinteren Fläche nicht überlappen;
eine erste Spule (610), die eine Struktur aufweist, die sich so zwischen dem ersten Magneten und dem zweiten Magneten befindet und mehrmals um eine erste Achse senkrecht zur hinteren Fläche gewickelt ist, dass sie den ersten Magneten und den zweiten Magneten in einer Ansicht von der hinteren Fläche nicht überlappt; und
eine zweite Spule (620), die sich so innerhalb des Gehäuses befindet, dass sie den ersten Magneten und den zweiten Magneten nicht überlappt und die erste Spule in einer Ansicht von der hinteren Fläche überlappt,
wobei die zweite Spule eine Struktur aufweist, die durch einen Raum zwischen dem ersten Magneten und dem zweiten Magneten hindurchgeht, wobei die zweite Spule (620) in einer Ansicht von der hinteren Fläche Folgendes umfasst:
ein oberes Muster (621), das eine Struktur aufweist, die sich gerade von links nach rechts oberhalb der ersten Spule erstreckt, ohne die erste Spule zu überlappen;
ein unteres Muster (623), das eine Struktur aufweist, die sich parallel zu dem oberen Muster von links nach rechts unter der ersten Spule erstreckt, ohne die erste Spule zu überlappen; und
ein zentrales Muster (622, 624), das eine Struktur aufweist, die sich von dem oberen Muster zu dem unteren Muster über einen innerhalb der ersten Spule definierten Innenraum (611) erstreckt,
wobei das zentrale Muster eine X-Form aufweist.

2. Elektronische Vorrichtung, die Folgendes umfasst:
ein Gehäuse umfassend eine vordere Fläche, eine hintere Fläche und einer Seitenfläche, welche die vordere Fläche und die hintere Fläche umgibt;
einen ersten Magneten (473a, 699a) und einen zweiten Magneten (473b, 699b), die sich innerhalb des Gehäuses befinden und sich in einer Ansicht von der hinteren Fläche nicht überlappen;
eine erste Spule (610), die eine Struktur aufweist, die sich zwischen dem ersten Magneten und dem zweiten Magneten befindet und mehrmals um eine erste Achse senkrecht zur hinteren Fläche gewickelt ist, so dass sie den ersten Magneten und den zweiten Magneten in einer Ansicht von der hinteren Fläche nicht überlappt; und
eine zweite Spule (620), die sich so innerhalb des Gehäuses befindet, dass sie den ersten Magneten und den zweiten Magneten nicht überlappt und die erste Spule überlappt in einer Ansicht von der hinteren Fläche,
wobei die zweite Spule eine Struktur aufweist, die durch einen Raum zwischen dem ersten Magneten und dem zweiten Magneten hindurchgeht, wobei die zweite Spule (620) in einer Ansicht von der hinteren Fläche Folgendes umfasst:
ein oberes Muster (621), das eine Struktur aufweist, die sich gerade von links nach rechts oberhalb der ersten Spule erstreckt, ohne die erste Spule zu überlappen;
ein unteres Muster (623), das eine Struktur aufweist, die sich parallel zu dem oberen Muster von links nach rechts unter der ersten Spule erstreckt, ohne die erste Spule zu überlappen; und
ein zentrales Muster (622, 624), das eine Struktur aufweist, die sich von dem oberen Muster zu dem unteren Muster über einen innerhalb der ersten Spule definierten Innenraum (611) erstreckt, wobei das zentrale Muster (622, 624) Folgendes umfasst:
ein erstes zentrales Muster (1022), das eine Struktur aufweist, die sich von einem rechten Ende des oberen Musters zu dem Innenraum erstreckt;
ein zweites zentrales Muster (1023), das eine Struktur aufweist, die sich von einem Ende des ersten zentralen Musters, das sich in dem Innenraum befindet, zu einem rechten Ende des unteren Musters erstreckt;
ein drittes zentrales Muster (1025), das eine Struktur aufweist, die sich von einem linken Ende des unteren Musters zu dem Innenraum erstreckt; und
ein viertes zentrales Muster (1026), das eine Struktur aufweist, die sich von einem Ende des dritten zentralen Musters, das sich in dem Innenraum befindet, zu einem linken Ende des oberen Musters erstreckt.

3. Elektronische Vorrichtung nach Anspruch 1, die ferner eine Antennenstruktur umfasst, die in einen oberen Abschnitt (602a), einen zentralen Abschnitt (602b) und einen unteren Abschnitt (6020) geteilt ist in einer Ansicht von der hinteren Fläche,
wobei die erste Spule (610) in dem zentralen Abschnitt angeordnet ist,
wobei das obere Muster (621) der zweiten Spule (620) in dem oberen Abschnitt angeordnet ist, wobei das untere Muster (623) der zweiten Spule (620) in dem unteren Abschnitt angeordnet ist, und wobei das zentrale Muster (622, 624) der zweiten Spule (620) in dem zentralen Abschnitt angeordnet ist.

4. Elektronische Vorrichtung nach Anspruch 3, wobei der zentrale Abschnitt (602b) der Antennenstruktur an seiner linken und rechten Seite eine im Vergleich zu dem oberen Abschnitt und dem unteren Abschnitt in den Innenraum (611) vertiefte Form aufweist,
wobei sich der erste Magnet in einem ersten Außenraum (651) der vertieften Form befindet, die auf der linken Seite des zentralen Abschnitts vorgesehen ist, und
wobei sich der zweite Magnet in einem zweiten Außenraum (652) der vertieften Form befindet, die auf der rechten Seite des zentralen Abschnitts vorgesehen ist.

5. Elektronische Vorrichtung nach Anspruch 3, wobei das zentrale Muster Folgendes umfasst:
ein erstes zentrales Muster (622), das eine Struktur aufweist, die sich über den Innenraum von einer rechten Seite des oberen Abschnitts zu einer linken Seite des unteren Abschnitts erstreckt; und
ein zweites zentrales Muster (624), das eine Struktur aufweist, die sich über den Innenraum von einer rechten Seite des unteren Abschnitts zu einer linken Seite des oberen Abschnitts erstreckt.

6. Elektronische Vorrichtung nach Anspruch 5, wobei die Antennenstruktur eine Vielzahl von Schichten umfasst,
wobei eines von dem ersten zentralen Muster (622) und dem zweiten zentralen Muster (624) zusammen mit der ersten Spule auf einer ersten Schicht der Antennenstruktur angeordnet ist, und wobei ein anderes von dem ersten zentralen Muster und dem zweiten zentralen Muster auf einer zweiten Schicht der Antennenstruktur angeordnet ist.

7. Elektronische Vorrichtung nach Anspruch 3, wobei das zentrale Muster Folgendes umfasst:
ein erstes zentrales Muster (622, 1022), das eine Struktur aufweist, die sich von einer rechten Seite des oberen Abschnitts zu dem Innenraum erstreckt;
ein zweites zentrales Muster (624, 1023), das eine Struktur aufweist, die sich von einem Ende des ersten zentralen Musters, das sich in dem Innenraum befindet, zu einer rechten Seite des unteren Abschnitts erstreckt;
ein drittes zentrales Muster (622, 1025), das eine Struktur aufweist, die sich von einer linken Seite des unteren Abschnitts zu dem Innenraum erstreckt; und
ein viertes zentrales Muster (624, 1026), das eine Struktur aufweist, die sich von einem Ende des dritten zentralen Musters, das sich in dem Innenraum befindet, zu einer linken Seite des oberen Abschnitts erstreckt,
wobei die Antennenstruktur eine Vielzahl von Schichten umfasst, und
wobei das erste zentrale Muster, das zweite zentrale Muster, das dritte zentrale Muster und das vierte zentrale Muster auf einer gleichen Schicht der Antennenstruktur angeordnet sind.

8. Elektronische Vorrichtung nach Anspruch 1, die ferner einen dritten Magneten umfasst, der sich in einer Ansicht von der hinteren Fläche unter dem unteren Muster befindet.

9. Elektronische Vorrichtung nach Anspruch 1, die ferner einen vierten Magneten umfasst, der sich so in dem Innenraum befindet, dass er die erste Spule und die zweite Spule in einer Ansicht von der hinteren Fläche nicht überlappt.

10. Elektronische Vorrichtung nach Anspruch 1, wobei der erste Magnet und der zweite Magnet so konfiguriert sind, dass sie entlang eines runden Umfangs der zweiten Spule rund sind.

11. Elektronische Vorrichtung nach Anspruch 1, wobei die erste Spule zum Unterstützen von drahtlosem Laden konfiguriert ist, und
wobei die zweite Spule zum Unterstützen von Kurzstreckenfunk konfiguriert ist.

12. Elektronische Vorrichtung nach Anspruch 1, wobei das Gehäuse ein erstes Gehäuse und ein in Bezug auf das erste Gehäuse drehbares zweites Gehäuse umfasst, und
die erste Spule, die zweite Spule, der erste Magnet und der zweite Magnet in einem von dem ersten Gehäuse und dem zweiten Gehäuse aufgenommen sind.

## Revendications

1. Appareil électronique comprenant :
un boîtier comprenant une surface avant, une surface arrière et une surface latérale entourant la surface avant et la surface arrière,
un premier aimant (473a, 699a) et un deuxième aimant (473b, 699b) situés à l'intérieur du boîtier sans se chevaucher, vus depuis la surface arrière,
une première bobine (610) présentant une structure située entre le premier aimant et le deuxième aimant et enroulée plusieurs fois autour d'un premier axe perpendiculaire à la surface arrière de manière à ne pas chevaucher le premier aimant et le deuxième aimant, vus depuis la surface arrière, et
une deuxième bobine (620) située à l'intérieur du boîtier de manière à ne pas chevaucher le premier aimant et le deuxième aimant et à chevaucher la première bobine, vus depuis la surface arrière,
ladite deuxième bobine présentant une structure traversant un espace situé entre le premier aimant et le deuxième aimant et, vue depuis la surface arrière, la deuxième bobine (620) comprenant :
un motif supérieur (621) présentant une structure s'étendant de manière rectiligne de gauche à droite au-dessus de la première bobine sans chevaucher celle-ci,
un motif inférieur (623) présentant une structure s'étendant parallèlement au motif supérieur de gauche à droite sous la première bobine sans chevaucher celle-ci, et
un motif central (622, 624) présentant une structure s'étendant depuis le motif supérieur jusqu'au motif inférieur en passant par un espace intérieur (611) défini à l'intérieur de la première bobine ;
ledit motif central ayant la forme d'un X.

2. Appareil électronique comprenant :
un boîtier comprenant une surface avant, une surface arrière et une surface latérale entourant la surface avant et la surface arrière,
un premier aimant (473a, 699a) et un deuxième aimant (473b, 699b) situés à l'intérieur du boîtier sans se chevaucher, vus depuis la surface arrière,
une première bobine (610) présentant une structure située entre le premier aimant et le deuxième aimant et enroulée plusieurs fois autour d'un premier axe perpendiculaire à la surface arrière de manière à ne pas chevaucher le premier aimant et le deuxième aimant, vus depuis la surface arrière, et
une deuxième bobine (620) située à l'intérieur du boîtier de manière à ne pas chevaucher le premier aimant et le deuxième aimant et à chevaucher la première bobine, vus depuis la surface arrière,
ladite deuxième bobine présentant une structure traversant un espace situé entre le premier aimant et le deuxième aimant et, vue depuis la surface arrière, la deuxième bobine (620) comprenant :
un motif supérieur (621) présentant une structure s'étendant de manière rectiligne de gauche à droite au-dessus de la première bobine sans chevaucher celle-ci,
un motif inférieur (623) présentant une structure s'étendant parallèlement au motif supérieur de gauche à droite sous la première bobine sans chevaucher celle-ci, et
un motif central (622, 624) présentant une structure s'étendant depuis le motif supérieur jusqu'au motif inférieur en passant par un espace intérieur (611) défini à l'intérieur de la première bobine ;
ledit motif central (622, 624) comprenant :
un premier motif central (1022) présentant une structure s'étendant depuis une extrémité droite du motif supérieur jusqu'à l'espace intérieur,
un deuxième motif central (1023) présentant une structure s'étendant depuis une extrémité du premier motif central située dans l'espace intérieur jusqu'à une extrémité droite du motif inférieur,
un troisième motif central (1025) présentant une structure s'étendant depuis une extrémité gauche du motif inférieur jusqu'à l'espace intérieur, et
un quatrième motif central (1026) présentant une structure s'étendant depuis une extrémité du troisième motif central située dans l'espace intérieur jusqu'à une extrémité gauche du motif supérieur.

3. Appareil électronique selon la revendication 1, comprenant en outre une structure d'antenne divisée en une partie supérieure (602a), une partie centrale (602b) et une partie inférieure (6020), vue depuis la surface arrière,
ladite première bobine (610) étant disposée dans la partie centrale,
ledit motif supérieur (621) de la deuxième bobine (620) étant disposé dans la partie supérieure,
ledit motif inférieur (623) de la deuxième bobine (620) étant disposé dans la partie inférieure, et
ledit motif central (622, 624) de la deuxième bobine (620) étant disposé dans la partie centrale.

4. Appareil électronique selon la revendication 3, dans lequel la partie centrale (602b) de la structure d'antenne présente, sur ses côtés gauche et droit, une forme en retrait dans l'espace intérieur (611) par rapport à la partie supérieure et à la partie inférieure,
dans lequel le premier aimant est situé dans un premier espace extérieur (651) de la forme en retrait prévue sur le côté gauche de la partie centrale, et
dans lequel le deuxième aimant est situé dans un deuxième espace extérieur (652) de la forme en retrait prévue sur le côté droit de la partie centrale.

5. Appareil électronique selon la revendication 3, dans lequel le motif central comprend :
un premier motif central (622) présentant une structure s'étendant depuis le côté droit de la partie supérieure jusqu'au côté gauche de la partie inférieure en traversant l'espace intérieur, et
un deuxième motif central (624) présentant une structure s'étendant depuis le côté droit de la partie inférieure jusqu'au côté gauche de la partie supérieure en traversant l'espace intérieur.

6. Appareil électronique selon la revendication 5, dans lequel la structure d'antenne comprend une pluralité de couches,
un motif parmi le premier motif central (622) et le deuxième motif central (624) étant disposé sur une première couche de la structure d'antenne conjointement avec la première bobine, et
l'autre motif parmi le premier motif central et le deuxième motif central étant disposé sur une deuxième couche de la structure d'antenne.

7. Appareil électronique selon la revendication 3, dans lequel le motif central comprend :
un premier motif central (622, 1022) présentant une structure s'étendant depuis le côté droit de la partie supérieure jusqu'à l'espace intérieur,
un deuxième motif central (624, 1023) présentant une structure s'étendant depuis une extrémité du premier motif central située dans l'espace intérieur jusqu'au côté droit de la partie inférieure,
un troisième motif central (622, 1025) présentant une structure s'étendant depuis le côté gauche de la partie inférieure jusqu'à l'espace intérieur, et
un quatrième motif central (624, 1026) présentant une structure s'étendant depuis une extrémité du troisième motif central située dans l'espace intérieur jusqu'au côté gauche de la partie supérieure ;
ladite structure d'antenne comprenant une pluralité de couches, et
lesdits premier motif central, deuxième motif central, troisième motif central et quatrième motif central étant disposés sur une même couche de la structure d'antenne.

8. Appareil électronique selon la revendication 1, comprenant en outre un troisième aimant situé sous le motif inférieur, vu depuis la surface arrière.

9. Appareil électronique selon la revendication 1, comprenant en outre un quatrième aimant situé dans l'espace intérieur de manière à ne pas chevaucher la première bobine et la deuxième bobine, vus depuis la surface arrière.

10. Appareil électronique selon la revendication 1, dans lequel le premier aimant et le deuxième aimant sont conçus ronds le long d'une périphérie ronde de la deuxième bobine.

11. Appareil électronique selon la revendication 1, dans lequel la première bobine est conçue pour permettre une charge sans fil, et
dans lequel la deuxième bobine est conçue pour permettre une communication sans fil à courte portée.

12. Appareil électronique selon la revendication 1, dans lequel le boîtier comprend un premier boîtier et un deuxième boîtier qui est rotatif par rapport au premier boîtier, et
les première bobine, deuxième bobine, premier aimant et deuxième aimant sont logés dans l'un des premier boîtier et deuxième boîtier.
